(19) Europäisches Patentamt
European Patent Office
Office européen des brevets

(11) **EP 2 259 125 B1**

(12) **EUROPÄISCHE PATENTSCHRIFT**

(45) Veröffentlichungstag und Bekanntmachung des Hinweises auf die Patenterteilung:
**26.07.2017 Patentblatt 2017/30**

(51) Int Cl.:
***G02B 21/00*** *(2006.01)*     ***G02B 26/10*** *(2006.01)*
*G02B 5/04* *(2006.01)*     *G02B 27/14* *(2006.01)*

(21) Anmeldenummer: **10178852.9**

(22) Anmeldetag: **15.10.2008**

(54) **Laser Scanner-Gerät für Fluoreszenzmessungen**

Laser scanner device for fluorescence measurements

Scanner laser pour mesures de fluorescence

(84) Benannte Vertragsstaaten:
**AT CH DE FR GB LI**

(30) Priorität: **22.10.2007 CH 16412007**

(43) Veröffentlichungstag der Anmeldung:
**08.12.2010 Patentblatt 2010/49**

(62) Dokumentnummer(n) der früheren Anmeldung(en) nach Art. 76 EPÜ:
**08166697.6 / 2 053 447**

(73) Patentinhaber: **Tecan Trading AG**
**8708 Männedorf (CH)**

(72) Erfinder: **Gebetsroither, Harald**
**5082 Grödig (AT)**

(74) Vertreter: **OK pat AG**
**Industriestrasse 47**
**6300 Zug (CH)**

(56) Entgegenhaltungen:
| | |
|---|---|
| **EP-A- 0 142 393** | **EP-A- 0 490 510** |
| **WO-A-02/059677** | **DE-A1- 19 707 227** |
| **DE-U1- 20 221 635** | **FR-A1- 2 427 017** |
| **US-A- 5 304 810** | **US-B1- 6 628 385** |

**Beschreibung**

Die Erfindung betrifft ein Laser Scanner-Gerät zum Abbilden und/oder Vermessen von auf Objektträgern befindlichen, mit zwei unterschiedlichen Fluoreszenzfarbstoffen behandelten, fluoreszierenden Proben sowie ein entsprechendes Verfahren. Dabei umfasst dieses Laser Scanner-Gerät einen motorisch verfahrbaren Probentisch mit einer Aufnahme für Objektträger in einer Probenebene; mindestens einen Laser und ein erstes optisches System zum Bereitstellen von zwei parallel zueinander ausgerichteten und parallel zu dieser Ebene verlaufenden Laserstrahlen unterschiedlicher Wellenlänge; eine Scanner-Einrichtung, die einen parallel zu dieser Ebene und in einer Bewegungsrichtung hin und her beweglichen Scanner-Kopf mit einem optischen Umlenkelement zum Umlenken der Laserstrahlen zu der Probe hin umfasst und ein Objektiv zum Fokussieren der Laserstrahlen auf der Probe in der Ebene. Das Laser Scanner-Gerät umfasst zudem ein zweites optisches System zum Weiterleiten von durch die Laserstrahlen an der Probe ausgelösten und durch das Objektiv und das Umlenkelement in eine zur Ebene im wesentlichen parallelen Richtung umgelenkten Emissionsstrahlenbündel zu Detektoren und zwei Detektoren zum Erfassen der von den Proben kommenden Emissionsstrahlenbündel unterschiedlicher Wellenlänge.

Zum Abbilden von auf Objektträgern befindlichen, fluoreszierenden Proben werden seit langem konventionelle optische Rastermikroskope verwendet. Immer häufiger finden wegen der verbesserten Auflösung konfokale optische Rastermikroskope Verwendung. Ein solches Mikroskop ist beispielsweise aus GB 2 184 321 A bekannt. Dieses Mikroskop lenkt das Licht einer Laserquelle entlang eines optischen Pfads, um mit dem fokussierten Lichtstrahl eine sich in der Objektebene des Mikroskops befindende Probe abzurastern bzw. "zu scannen". Der von der Probe emittierte Fluoreszenzstrahl wird zum Entrastern durch den gleichen optischen Pfad zurückgelenkt, mittels eines Dichroidspiegels vom Anregungsstrahl getrennt und auf einer konfokalen Öffnung vor einem Detektor abgebildet. Damit wird aus der Fluoreszenz einer Probe ein Bild geformt, ohne dass das auf die Probe gerichtete Licht zum Auslösen der Fluoreszenz auf den Detektor treffen kann. Viele der im Handel erhältlichen Mikroskope beruhen auf dieser Konstruktion und weisen Strahlteiler oder Filter zum Unterteilen des von der Probe emittierten Lichts in Strahlen mit unterschiedlichem Wellenlängenbereich auf. Dadurch können auch zwei fluoreszierende Farbstoffe verwendet und deren Emission mit zwei verschiedenen Detektoren gemessen werden.

Allerdings weisen alle konfokalen Scanner-Systeme, welche die beiden Anregungslichtstrahlen mit den beiden unterschiedlichen Wellenlängen auf denselben Abtastfleck lenken, den Nachteil auf, dass die Abgrenzung der beiden Emissionssignale nur spektral erfolgen kann. Da die Absorption und/oder die Fluoreszenzemissionsspektren der verwendeten Farbstoffe sich meist überlappen, können sie (insbesondere bei grösseren Intensitätsunterschieden) nicht zuverlässig und quantitativ unterschieden werden. Damit nicht in zeitraubender Weise zuerst ein Bild mit einem ersten Fluoreszenzspektrum und dann ein zweites Bild mit einer anderen Art des Anregungsstrahls erzeugt werden muss, wurden Abtastmikroskope und "Scanner-Geräte" vorgeschlagen, die zumindest zwei Anregungsstrahlen mit unterschiedlicher Ausrichtung bereitstellen.

Ein solches Mikroskop ist beispielsweise aus US 5,304,810 bekannt, welches mit zwei oder mehr räumlich voneinander getrennten Beleuchtungsstrahlen zwei oder mehr räumlich voneinander getrennte Beleuchtungspunkte erzeugt und eine Probe simultan mit diesen Beleuchtungspunkten abrastert. Die dadurch simultan erzeugten, räumlich voneinander getrennten Fluoreszenzemissionsstrahlenbündel werden entsprechend ihrer jeweiligen Rasterposition simultan mittels individuellen, auf diese räumlich voneinander getrennten Beleuchtungspunkte ausgerichteten Detektoren gemessen. Auch aus US 6,628,385 B1 ist ein solches Mikroskop bekannt, das mittels zwei Anregungslasern zwei separate Lichtflecke auf einer Probe erzeugt. Dabei durchstossen die beiden Anregungsstrahlen unter leicht unterschiedlichen Winkeln eine Öffnung in einem 45°-Spiegel und treffen dann auf ein Objektiv-Element. Dies bewirkt das Bereitstellen von zwei voneinander getrennten Lichtflecken auf der Probe, wobei an jedem Lichtfleck ein Emissionsstrahlenbündel erzeugt wird. Die beiden resultierenden Emissionsstrahlenbündel werden am 45°-Spiegel reflektiert und treffen auf eine Sekundärlinse auf, wonach sie direkt oder nach einer zweiten Umlenkung jeweils einen von zwei Detektoren erreichen. Zudem können optische Trennelemente, wie Dichroidfilter oder Prismen vor den als Photomulitplier ausgebildeten Detektoren positioniert werden. Zum Abrastern der Proben kann ein zwischen dem 45°-Spiegel und dem Objektiv-Element angeordnetes Rastersystem verwendet werden.

Aus WO 02/059677 A1 ist ein optisches System zum Anregen und Messen von Fluoreszenz an oder in mit Fluoreszenzfarbstoffen behandelten Proben bekannt. Dieses System umfasst zumindest einen Laser zum Anregen der verwendeten Fluoreszenzfarbstoffe, einen Spiegel zum Umlenken des Laserlichts in Richtung einer Probe, ein Umlenkelement zum Umlenken des Lichts aus dem Laser auf diesen Spiegel in einer Y-Richtung eines (hier kartesischen) Koordinatensystems, eine Optik zum Bilden eines ersten Brennpunktes des Laserlichts auf der Probe, eine den Spiegel und die Optik umfassende, in der Y-Richtung bewegliche Raster-Einheit, einen in der X- und Z-Richtung des Koordinatensystems bewegbaren Probentisch zum Ausrichten der Probe gegenüber dem ersten Brennpunkt, eine optische Anordnung zum Abbilden des von der Probe emittierten Lichts in einer in einem zweiten Brennpunkt angeordneten Lochblende und einen Detektor zum Messen der Intensität des die Lochblende durchtretenden Lichts.

Diese bekannten Mikroskope zum hochempfindlichen Abrastern von in einem regelmässigem Muster (einem sogenannten Array) angeordneten Proben sind zudem befähigt, einen ganzen Standard-Objektträger für die Lichtmikroskopie abzurastern und arbeiten bei mittlerer Auflösung zufriedenstellend. Es ist aber zu beachten, dass beim Erhöhen der Auflösung zusätzliche Effekte, wie dynamische Verschiebungen zwischen den Farbkanälen sichtbar werden können. Dadurch liegen beispielsweise die Abbildungspunkte des roten und des grünen Kanals nicht mehr genau übereinander. Die relative Verschiebung kann sich zwischen den Kanälen über die Ausdehnung des Bildes dynamisch ändern. Zudem hängt diese Verschiebung wesentlich von der Positioniergenauigkeit der Probe im Fokus ab. Aus diesen Gründen ist eine relative Verschiebung nachträglich per Software nur sehr schwer korrigierbar.

Sollen die beiden Kanäle nicht nur spektral sondern auch räumlich voneinander getrennt werden, so müssen die beiden Fokalpunkte der Anregungslaser auf der Probe voneinander getrennt werden. Dies lässt sich nur dadurch erreichen, dass die gebündelten Lichtstrahlen der beiden Laser in einem zwar kleinen aber doch signifikanten Winkel zueinander auf das Scanobjektiv fallen. Es ist allgemein bekannt, dass alle in einem bestimmten Winkel auf das Objektiv auftreffenden Strahlen auf denselben Punkt innerhalb der Fokalebene fokussiert werden. Ein bestimmter Einfallswinkel vor dem Objektiv entspricht also immer einem bestimmten Ort hinter dem Objektiv. In diesem Zusammenhang ist es unerheblich, ob der Laserstrahl das Objektiv in dessen Mitte oder in irgend einem anderem Teilbereich der Objektivapertur trifft; die Bündelung in ein und demselben Fokuspunkt ist davon nicht betroffen. Unterschiedlich ist jedoch der Strahlwinkel hinter dem Objektiv, die Strahlen treffen nun aus unterschiedlichen Richtungen im Fokuspunkt zusammen. Im exakten Fokalpunkt spielt dies keine Rolle, in Ebenen die geringfügig darunter oder darüber liegen, jedoch schon. Dort entfernen sich die Strahlen vom exakten Fokuspunkt in Abhängigkeit von diesem Winkel unterschiedlich schnell.

Sollen nun zwei Laserstrahlen entsprechend diesen Vorgaben auf einer Probe und in der Fokalebene räumlich getrennt voneinander fokussiert werden und bilden diese Laserstrahlen deshalb beim Einfall auf das Scanobjektiv einen Winkel zueinander, so führt dies zwangsläufig dazu, dass zumindest einer der beiden Laserstrahlen vor dem Auftreffen auf das Spiegelelement jetzt auch nicht mehr exakt parallel zur Scanachse verlaufen kann.

Wird nun der Scanner-Kopf bewegt, ändert sich der Auftreffpunkt des Laserstrahls auf das Objektiv. Der Strahl wird zwar nach wie vor auf denselben Fokalpunkt abgelenkt werden, aber unter verschiedenen Winkeln. Ausserhalb der Fokalebene ergeben sich dann entsprechend dem oben gesagten unterschiedliche Positionen je nach Stellung des Scanner-Kopfes in X-Richtung und je nach der Abweichung der Probenebene von der exakten Fokalebene in Z-Richtung. Die letztere Abweichung ist im Rahmen von realistischen Gerätetoleranzen nie vollständig auszuschliessen und als zufällige Toleranz auch nicht beliebig gut kontrollierbar.

Die beschriebenen Effekte sind an sich klein, sie machen sich jedoch im Beispielsaufbau bei Auflösungen unterhalb von 5 $\mu$m signifikant bemerkbar. Die beschriebenen Effekte können dazu führen, dass die Bilder der beiden Detektionskanäle nicht über den gesamten Bildbereich deckungsgleich sind, und dass das Ausmass der Abweichungen unkontrolliert über das Bild variiert. Quantitative Vermessungen von sehr kleinen Strukturen werden dadurch unmöglich oder zumindest verfälscht. Visuell machen sich die Fehler als lokal variierende Farbsäume bemerkbar.

Aus dem Dokument DE 197 07 227 A1 ist eine Lichtabtastvorrichtung zum Anregen und Detektieren von Emissionslicht bekannt. Die Abtastvorrichtung umfasst eine Lichterzeugungsvorrichtung, eine Ablenkeinheit, eine Abbildungseinheit und eine Nachweiseinheit zur Detektion. Zur Verringerung einer Abtastzeit bei gleichbleibend hoher Auflösung besitzt die Lichtabtastvorrichtung des Weiteren eine Aufteilungsvorrichtung zum Aufteilen eines Lichtstrahlenbündels in wenigstens zwei Lichtstrahlenbündel. Die Aufteilungsvorrichtung umfasst einen keilförmigen, dichroidischen Doppelspiegel. Das Strahlenbündel wird an beiden Flächen des Keils reflektiert und so aufgeteilt. Es können auch zwei keilförmige Doppelspiegel eingesetzt werden, so dass aus einem Strahlenbündel vier Strahlenbündel erzeugt werden. Dadurch wird eine simultane Abtastung der Probe ermöglicht und so die Abtastzeit verringert.

Aus dem Dokument EP 0 490 510 A ist eine Sensoren-Anordnung mit einem Teleskop bekannt, mit welchem Licht eines Sichtfeldes gegenüber von Detektoren ausgerichtet werden kann. Ein keilförmiger Strahlenteiler mit zwei nicht-parallelen Oberflächen reflektiert das Licht auf eine Detektions-Anordnung mit zwei Detektoren. Eine Oberfläche dieses Strahlenteilers ist dabei als dichroidische Schicht, die andere als Spiegel ausgebildet. Die dichroidische Schicht reflektiert ein Lichtbündel eines ersten Wellenlängenbereichs und lässt ein Lichtbündel eines zweiten Wellenlängenbereichs durchgehen. Dieses Licht des zweiten Wellenlängenbereiches wird an der Spiegel-Oberfläche reflektiert. So werden die beiden Lichtbündel zweier verschiedener Wellenlängenbereiche desselben Sichtfeldes auf zwei Regionen einer Photodetektor-Anordnung in einer einzigen Fokus-Ebene umgeleitet. Aus einem Sichtfeld werden somit zwei Bilder auf Grund der getrennten, unterschiedlichen Wellenlängenbereiche kreiert.

Die Aufgabe der vorliegenden Erfindung besteht darin, ein alternatives Laser Scanner-Gerät zum Abbilden und/oder Vermessen von auf Objektträgern befindlichen, mit zwei unterschiedlichen Fluoreszenzfarbstoffen behandelten, fluoreszierenden Proben vorzuschlagen.

Diese Aufgabe wird gemäss einem ersten Aspekt mit einem Laser Scanner-Gerät gemäss den Merkmalen des unabhängigen Anspruchs 1 erfüllt, indem ein Laser Scanner-Gerät zum Abbilden und/oder Vermessen von auf Objektträgern befindlichen, mit zwei unterschiedlichen Fluoreszenzfarbstoffen behandelten, fluoreszierenden Proben vorgeschlagen wird, welches umfasst:

(a) einen motorisch verfahrbaren Probentisch mit einer Aufnahme für Objektträger in einer Probenebene;

(b) mindestens einen Laser und ein erstes optisches System zum Bereitstellen von zwei parallel zueinander ausgerichteten und parallel zu dieser Ebene verlaufenden Laserstrahlen unterschiedlicher Wellenlänge;

(c) eine Scanner-Einrichtung, die einen parallel zu dieser Ebene und in einer Bewegungsrichtung hin und her beweglichen Scanner-Kopf mit einem optischen Umlenkelement zum Umlenken der Laserstrahlen zu der Probe hin umfasst;

(d) ein Objektiv zum Fokussieren der Laserstrahlen auf der Probe in der Ebene;

(e) ein zweites optisches System zum Weiterleiten von durch die Laserstrahlen an der Probe ausgelösten und durch das Objektiv und das Umlenkelement in eine zur Ebene im wesentlichen parallelen Richtung umgelenkten Emissionsstrahlenbündel zu Detektoren, und

(f) zwei Detektoren zum Erfassen der von den Proben kommenden Emissionsstrahlenbündel unterschiedlicher Wellenlänge.

Das erfindungsgemässe Laser Scanner-Gerät ist dadurch gekennzeichnet, dass die Scanner-Einrichtung einen Antrieb und einen Gegenschwinger umfasst, wobei der Scanner-Kopf und der Gegenschwinger mittels Pleuelstangen mit dem Antrieb verbunden und an je einer Linearführung verschiebbar befestigt sind, wobei der Antrieb dazu ausgebildet ist, den Scanner-Kopf in eine schnelle hin und her Bewegung in der Bewegungsrichtung zu bringen welche gleichzeitig eine Scan-Achse definiert, wobei der Gegenschwinger zur Impulskompensation mittels einer entgegengesetzten Bewegung zum Scanner-Kopf eine Masse hat, die zumindest äquivalent zur Masse des Scanner-Kopfs ist; und wobei das optische Umlenkelement als Dichroidspiegel, Prisma, Pentaprisma, Pentaspiegelanordnung oder eine Kombination derselben ausgebildet ist, und dass der Scanner-Kopf mit seinem optischen Umlenkelement und seiner Bewegungsrichtung eine Rasterebene definiert, wobei der Scanner-Kopf einen Massstab umfasst, der in einem Abstand zu einem linearen Messsystem des Laser Scanner-Geräts und in dieser Rasterebene angeordnet ist.

Diese Aufgabe wird gemäss einem zweiten Aspekt mit einem Verfahren zum Betrieb eines Laser Scanner-Geräts gemäss den Merkmalen des unabhängigen Anspruchs 12 erfüllt, indem ein Verfahren zum Abbilden und/oder Vermessen von auf Objektträgern befindlichen, mit zwei unterschiedlichen Fluoreszenzfarbstoffen behandelten, fluoreszierenden Proben vorgeschlagen wird, welches folgende Schritte umfasst:

(a) Bereitstellen eines motorisch verfahrbaren Probentisches mit einer Aufnahme für Objektträger in einer Probenebene;

(b) Bereitstellen von zwei parallel zueinander ausgerichteten und parallel zu dieser Ebene verlaufenden Laserstrahlen unterschiedlicher Wellenlänge mit mindestens einem Laser und einem ersten optischen System;

(c) Umlenken der Laserstrahlen zu der Probe hin mit einem optischen Umlenkelement einer Scanner-Einrichtung, die einen parallel zu dieser Ebene und in einer Bewegungsrichtung hin und her beweglichen Scanner-Kopf umfasst;

(d) Fokussieren der Laserstrahlen auf der Probe in der Ebene mit einem Objektiv;

(e) Weiterleiten von durch die Laserstrahlen an der Probe ausgelösten und durch das Objektiv und das Umlenkelement in eine zur Ebene im Wesentlichen parallelen Richtung umgelenkten Emissionsstrahlenbündel zu Detektoren mit einem zweiten optischen System, und

(f) Erfassen der von den Proben kommenden Emissionsstrahlenbündel unterschiedlicher Wellenlänge mit zwei Detektoren.

Das erfindungsgemässe Verfahren ist dadurch gekennzeichnet, dass die Scanner-Einrichtung einen Antrieb und einen Gegenschwinger umfasst, wobei der Scanner-Kopf und der Gegenschwinger mittels Pleuelstangen mit dem Antrieb verbunden und an je einer Linearführung verschiebbar befestigt sind, dass der Scanner-Kopf mit dem Antrieb in eine schnelle hin und her Bewegung in der Bewegungsrichtung gebracht wird, die gleichzeitig eine Scan-Achse definiert, wobei der Gegenschwinger, der eine Masse hat, die zur Impulskompensation zumindest äquivalent zur Masse des Scanner-Kopfs ist, eine entgegengesetzte Bewegung zum Scanner-Kopf ausführt; dass der Scanner-Kopf mit seinem optischen Umlenkelement und seiner Bewegungsrichtung eine Rasterebene definiert, wobei die Auslenkung des Scanner-Kopfs in der X-Achse mit einem Massstab gemessen wird, welcher in einem Abstand zu einem linearen Messsystem des Laser Scanner-Geräts in dieser Rasterebene angeordnet ist, und dass das optische Umlenkelement als Dichroidspiegel, Prisma, Pentaprisma, Pentaspiegelanordnung oder eine Kombination derselben ausgebildet ist.

Zusätzliche bevorzugte und erfindungsgemässe Merkmale ergeben sich aus den jeweils abhängigen Ansprüchen. Vorteile des erfindungsgemässen Laser Scanner-Geräts umfassen:

- Mit dem erfindungsgemässen Laser Scanner-Gerät aufgenommene rot/grün Bilder sind trotz der hohen Auflösung praktisch kongruent oder können durch eine einfache X/Y-Korrektur (lineare Schiftung) für das gesamte Bild kongruent gemacht werden.
- Der vorzugsweise verwendete keilförmige Dichroidspiegel mit in einem Zwischenwinkel zueinander angeordneten vorderen und hinteren dichroidischen Oberflächen ermöglicht gleichzeitig ein räumliches Auftrennen der Spots zum Anregen der Fluoreszenz in den Proben und der beiden in Richtung der Detektoren gelenkten Emissionsstrahlenbündel.

- Der vorzugsweise verwendete Pentaspiegelanordnung korrigiert alle Verkippungen des Scanner-Kopfes um eine zur Scan-Achse rechtwinklig verlaufende Achse, so dass die resultierenden Fokuspunkte ihre aktuelle Position in der Probenebene nicht verändern.

- Der erfindungsgemäss verwendete Gegenschwinger kompensiert Bewegungsimpulse des schnell bewegten Scanner-Kopfs, so dass diese Impulse nicht auf das Laser Scanner-Gerät übertragen werden.

- Der erfindungsgemäss verwendete und sowohl in der optischen Hauptebene als auch in der durch die beiden abtastenden Laserstrahlen definierte Rasterebene platzierte lineare Encoder (Massstab) ermöglicht eine sehr genaue Erfassung der momentanen Position des Scanner-Kopfs und ein exaktes Zurückrechnen auf die Position der aktuellen Fokuspunkte.

Das erfindungsgemässe Laser Scanner-Gerät soll nun an Hand von schematischen Zeichnungen, die den Umfang der vorliegenden Erfindung nicht einschränken sollen und die Beispiele von besonders bevorzugten Ausführungsformen darstellen, erläutert werden. Dabei zeigen:

Fig. 1    einen vertikalen Teilschnitt durch zwei Objektträgermagazine und einen vor diesen platzierten Objekttisch beim Transfer eines Objektträgers aus dem Proben-Magazin auf den Objekttisch;

Fig. 2    einen horizontalen Teilschnitt durch die Objektträgermagazine und eine Draufsicht auf den vor diesen platzierten Objekttisch beim Transfer eines Test-Objektträgers aus dem Testobjekt-Magazin auf den Objekttisch;

Fig. 3    vertikale Ansichten der Objektträgermagazine mit geöffnetem Testobjekt-Magazin, wobei:
Fig. 3A die Einschubseite der beiden Objektträgermagazine in einer Frontansicht vom Objekttisch her gesehen, und
Fig. 3B die beiden Objektträgermagazine im Vertikalschnitt mit Blick gegen den Objekttisch hin zeigt;

Fig. 4    vertikale Teilschnitte durch den Objekttisch und dessen Querneigevorrichtung, wobei:
Fig. 4A den Objekttisch mit Blick gegen die Objektträgermagazine und mit einem im geschlossenen Objekttisch doppelt gehaltenen Objektträger, und
Fig. 4B den Objekttisch mit Blick von den Objektträgermagazinen weg, mit geöffnetem Objekttisch, nach dem Entfernen bzw. vor dem Einschieben eines Objektträgers zeigt;

Fig. 5    einen vertikalen Teilschnitt durch den Objekttisch und dessen Höhenverstellung und Längsneigevorrichtung;

Fig. 6    eine Prinzipskizze mit wesentlichen optischen Elementen des Laser Scanner-Geräts mit einem Scanner-Kopf gemäss einer ersten Ausführungsform;

Fig. 7    Prinzipskizzen des Scanner-Kopfes, wobei:
Fig. 7A eine zweite Ausführungsform des Scanner-Kopfes, und
Fig. 7B eine dritte Ausführungsform des Scanner-Kopfes zeigt;

Fig. 8    einen horizontalen Teilschnitt durch ein Laser Scanner-Gerät mit wesentlichen optischen Elementen, einer Scanner-Einrichtung mit Scanner-Kopf und einem Objekttisch mit Objektträgermagazinen;

Fig. 9    einen horizontalen Teilschnitt durch den Scanner-Kopf des Laser ScannerGeräts mit dem zugeordneten Weggeber;

Fig. 10    eine Prinzipskizze des Weggebers für den Scanner-Kopf und dessen nichtlineare Bewegung beim Scannen als X/t - Diagramm, welches auf die unterschiedliche Zeitdauer ($\Delta t_1$; $\Delta t_2$) für die Erfassung des von einem Objekt ausgehenden Fluoreszenzlichtes je nach der Position einer Anzahl Pixel ($\Delta x$) auf der X-Achse hinweist;

Fig. 11    zeigt einen Test-Objektträger, der das Format eines Standardobjektträgers für die Lichtmikroskopie aufweist und der ausschliesslich lichtstabile Teststrukturen umfasst;

Fig. 12    zeigt einen Vertikalschnitt durch eine Exzentervorrichtung zum Einstellen der Fokallinie.

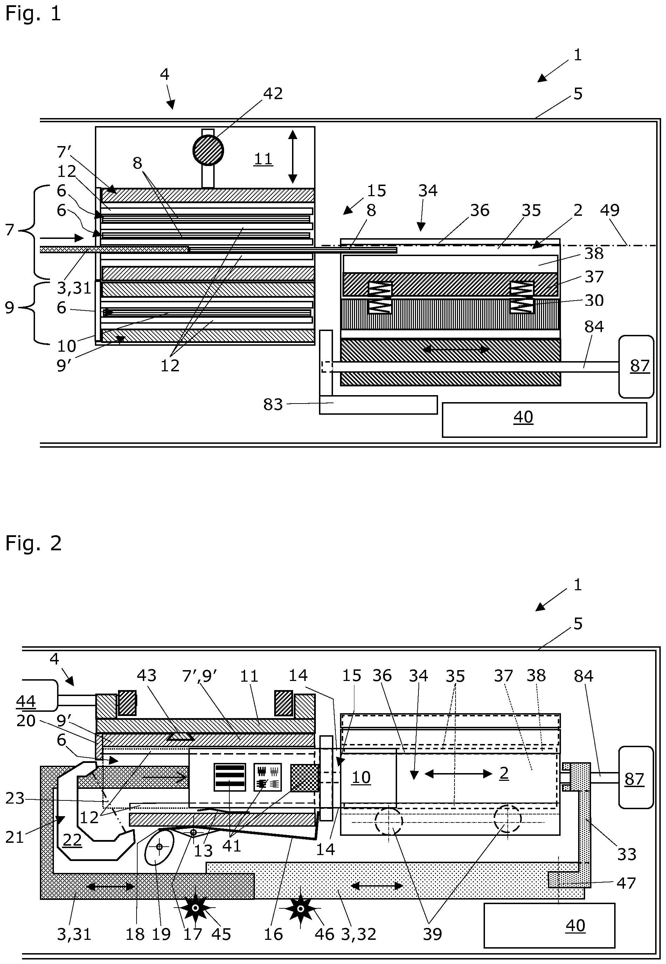

Die Figur 1 zeigt einen vertikalen Teilschnitt durch zwei Objektträgermagazine und einen vor diesen platzierten Objekttisch beim Transfer eines Objektträgers aus dem Proben-Magazin auf den Objekttisch. Diese beiden Objektträgermagazine gehören zu einem erfindungsgemässen Laser Scanner-Gerät 1 zum Abbilden und/oder Vermessen von auf Objektträgern befindlichen, mit Fluoreszenzfarbstoffen behandelten, fluoreszierenden Proben. Dieses Laser Scanner-Gerät umfasst einen eine Probenebene 49 definierenden Probentisch 2 und eine motorisierte Transportvorrichtung 3 zum Bewegen eines Objektträgers von einer Aufbewahrungseinheit 4 zum Probentisch 2 und zurück. Dabei umfasst die Aufbewahrungseinheit 4 je einen, zumindest je eine Lagerstelle 6 aufweisenden und während des Betriebs des Laser Scanner-Geräts 1 für die Transportvorrichtung 3 zugänglichen Probenteil 7 für Proben-Objektträger 8 und Testteil 9 für Test-Objektträger 10. In diesem erfindungsgemässen Laser Scanner-Gerät ist der Testteil 9 vom Probenteil 7 getrennt und als mit dem Laser Scanner-Gerät 1 fest verbundenes Testteil-Magazin 9' für einen oder mehrere Test-Objektträger 10 ausgebildet. Dadurch ist ein im Testteil 9 aufbewahrter Test-Objektträger 10 im Betriebszustand des Laser Scanner-Geräts 1 für eine Bedienungsperson manuell nicht zugänglich. Dies hat den Vorteil, dass jederzeit ein geeigneter Test-Objektträger bereitgestellt werden kann, ohne dass ein solcher Test-Objektträger 10 durch unsachgemässe Manipulationen durch Bedienungspersonen verschmutzt oder gar beschädigt werden kann. Das hier abgebildete Testteil-Magazin 9' umfasst eine offene Einschubseite 15.

In der hier dargestellten Ausführungsform ist der Probenteil 7 axial über dem Testteil 9 angeordnet und der Testteil 9 der Aufbewahrungseinheit 4 ist mit einer gegenüber dem Probentisch 2 des Laser Scanner-Geräts 1 beweglichen Stellplatte 11 der Aufbewahrungseinheit 4 fest verbunden. Dabei ist hier die Stellplatte 11 der Aufbewahrungseinheit 4 im Wesentlichen senkrecht gegenüber der Probenebene 49 des Probentisches 2 verschiebbar. So kann ein beliebiger Objektträger 8,10 auf das Niveau der vom Probentisch 2 definierten Probenebene 49 gebracht und zu einem linearen Transport auf den Probentisch 2 bereit gestellt werden.

Abweichend von dieser Darstellung in Fig. 1 kann die Stellplatte auch fest stehen und damit eine unbewegliche Verbindung zwischen dem Laser Scanner-Gerät 1 und dem Testteil-Magazin 9' bereit stellen. In einem solchen Fall muss der Probentisch 2 gegenüber dem Testteil-Magazin 9' bewegt werden, wenn ein linearer Transport eines beliebigen Objektträgers 8,10 von einem Probenteil-Magazin 7' oder einem Testteil-Magazin 9' auf den Probentisch 2 erfolgen soll. Auch kann ganz auf eine Stellplatte 11 verzichtet und das Testteil-Magazin 9' irgendwo derart am Laser Scanner-Gerät 1 befestigt werden, dass dadurch ein im Testteil 9 aufbewahrter Test-Objektträger 10 im Betriebszustand des Laser Scanner-Geräts 1 für eine Bedienungsperson manuell nicht zugänglich ist.

Weitere, nicht dargestellte Alternativen umfassen ein Bewegen eines sich bereits in der Probenebene 49 des Probentisches 2 befindenden Test-Objektträgers 10 in dieser Proben Ebene 49 in Bezug auf einen unbewegten Probentisch 2, ein Bewegen des Probentischs 2 in dieser Proben Ebene 49 in Bezug auf ein unbewegtes Testteil-Magazin 9' oder aber ein gegenseitiges Bewegen von Probentisch 2 und Testteil-Magazin 9'. In allen diesen Fällen wird ein linearer Transport eines beliebigen Objektträgers 8,10 von einem Probenteil-Magazin 7' oder einem Testteil-Magazin 9' auf den Probentisch 2 ermöglicht. Zudem ist es vorstellbar, einen Roboter einzusetzen, der einen Objektträger 8,10 aus einem der Magazine 7',9' entnimmt und auf dem Probentisch 2 positioniert; in diesem Fall können die Magazine 7',9' und der Probentisch 2 zueinander eine praktisch beliebige Position einnehmen. Es wird jedoch bevorzugt, dass die Probenebene 49 des Probentisches 2 im Wesentlichen horizontal angeordnet ist, wobei der Probentisch 2 einen Objektträger 8,10 über sich trägt. Allerdings kann der Probentisch 2 auch über Kopf angeordnet werden, so dass der eingesetzte Objektträger 8,10 unter dem Probentisch angeordnet ist. Auch eine beliebige andere Lage der Probenebene 49 im Raum ist grundsätzlich denkbar, wird aber weniger bevorzugt.

Das Laser Scanner-Gerät 1, gemäss der in Figur 1 abgebildeten, ersten Ausführungsform umfasst vorzugsweise ein Gehäuse 5, wobei der Probenteil 7 als von aussen in das Gehäuse 5 des Laser Scanner-Geräts 1 einsetzbares Magazin 7' für eine Vielzahl von Proben-Objektträgern 8 ausgebildet ist. Der Probenteil 7 ist bevorzugt reversibel an der Stellplatte 11 der Aufbewahrungseinheit 4 montierbar. In der gezeigten Ausführungsform verbindet eine steckbare Schwalbenschwanzverbindung das Probenteil-Magazin 7' mit der hier vertikal beweglichen Stellplatte 11. Somit kann das Probenteil-Magazin 7' am Handgriff 42 festgehalten und in im wesentlichen vertikaler Richtung in das Gehäuse 5 gesenkt und am Schwalbenschwanz 43 der Stellplatte 11 eingesteckt werden. Da hier die beiden Magazine 7',9' senkrecht übereinander angeordnet sind, stellt das fest mit der Stellplatte 11 verschraubte Testteil-Magazin 9' vorzugsweise gerade den unteren Anschlag für das in den Schwalbenschwanz 43 eingeschobene Probenteil-Magazin 7' dar.

Die Lagerstellen 6 im Probenteil-Magazin 7' und/oder im Testteil-Magazin 9' sind zur Aufnahme von Objektträgern ausgebildet, welche im Wesentlichen die Abmessungen eines Standardobjektträgers für die Lichtmikroskopie aufweisen. Vorzugsweise sind diese Lagerstellen 6 voneinander durch Lagerstege 12 getrennt, so dass diese Objektträger auf jeweils zwei sich jeweils im Wesentlichen über die ganze Länge der Objektträger 8,10 erstreckenden Lagerstegen 12 ruhen.

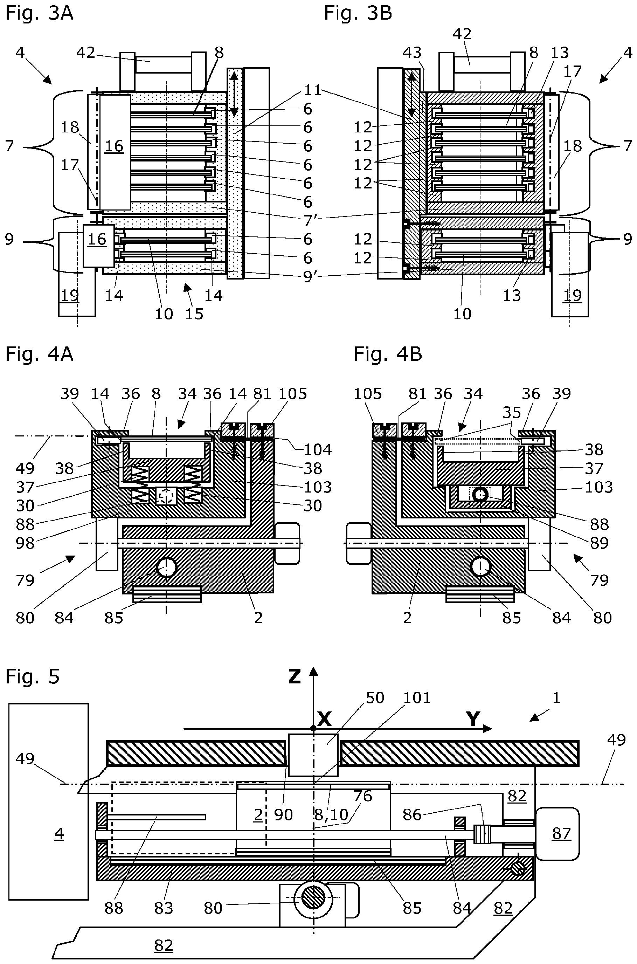

Der in der Figur 1 in einem Vertikalschnitt gezeigte Probentisch 2 ist zum Transfer von Proben-Objektträgern 8 oder von Test-Objektträgern 10 mittels eines an einer Aufhängung 83 angeordneten Spindeltriebes 84 unmittelbar vor eine Aufbewahrungseinheit 4 für solche Objektträger 8,10 verfahrbar ausgebildet. Die Aufnahme 34 des Probentisches 2 umfasst vorzugsweise zwei einander gegenüber liegende Nuten 35 zum Aufnehmen der beiden Längskanten 14 eines Proben-Objektträgers 8 oder eines Test-Objektträgers 10. Die Probenebene 49 ist dabei bevorzugt im Wesentlichen horizontal angeordnet. Der Probentisch 2 umfasst zum klemmenden Festhalten eines Objektträgers 8,10 in im wesentlichen senkrechter Richtung zur Oberfläche der Objektträger zwei feststehende Stege 36 und einen federnd gegen diese Stege 36 beweglichen Backen 37 mit zwei aufstehenden Seitenwänden 38, welche zusammen mit den Unterkanten der Stege 36 die Öffnungsweite der Nuten 35 definieren (vgl. auch Fig. 4). Bevorzugt überwacht bzw. regelt eine Steuerung 40 einen Motor 87, welche den Spindeltrieb 84 antreibt. Dadurch kontrolliert die Steuerung 40 die Bewegungen des Probentisches 2.

Figur 2 zeigt einen horizontalen Teilschnitt durch die in der Fig. 1 gezeigten Objektträgermagazine und eine Draufsicht auf den vor diesen platzierten Objekttisch beim Transfer eines Test-Objektträgers aus dem Testobjekt-Magazin auf den Objekttisch. Das hier abgebildete Testteil-Magazin 9' umfasst eine offene Einschubseite 15, welche in ihrer Breite zumindest teilweise von je einer, sich im wesentlichen über die ganze Stapelhöhe des Magazins 9' erstreckenden, individuell wegschwenkbaren Klappe 16 abdeckbar ist. Diese Klappe 16 ist hier weggeschwenkt, so dass der abgebildete Test-Objektträger aus der Einschubseite 15 des Testteil-Magazins 9' herausgeschoben werden kann, ohne dass er dabei von der wegschwenkbaren Klappe 16 behindert würde.

Im Falle des Testteil-Magazins 9' bildet diese wegschwenkbare Klappe 16 einen Teil der Verriegelung, welche ermöglicht, dass ein im Testteil 9 aufbewahrter Test-Objektträger 10 im Betriebszustand des Laser Scanner-Geräts 1 für eine Bedienungsperson manuell nicht zugänglich ist. Im Fall des Probenteil-Magazins 7' ermöglicht diese wegschwenkbare Klappe 16 in ihrem eingeklappten Zustand, das Handhaben (beispielsweise das Schwenken oder Kippen) eines mit zumindest einem Proben-Objektträger 8 gefüllten Magazins 7', ohne dass ein Herausfallen dieser Objektträger befürchtet werden muss. Bevorzugt weisen sowohl das Probenteil-Magazin 7' als auch das Testteil-Magazin 9', zumindest aber das Probenteil-Magazin 7' auf seiner der Einschubseite 15 gegenüber liegenden Seite eine sich im wesentlichen über die ganze Stapelhöhe erstreckende Sperrplatte 20 auf, welche einen Teil der Breite dieser Seite abdeckt. Diese Sperrplatte 20 verhindert insbesondere beim Handhaben des Probenteil-Magazins 7' ein Herausfallen von Objektträgern auf der anderen Seite.

Bevorzugt sind die bei jedem Magazin 7',9' individuell wegschwenkbaren Klappen 16 an je einer seitlich der Magazine 7',9' angeordneten Achse 17 drehbar befestigt. Diese individuell wegschwenkbaren Klappen 16 umfassen je eine Winkelplatte 18, die sich vorzugsweise im Wesentlichen über die ganze Stapelhöhe der Magazine 7',9' erstreckt. Diese wegschwenkbaren Klappen 16 werden zum Freigeben der Einschubseite 15 eines der Magazine 7',9' bevorzugt mit einer drehbaren, motorisch angetriebenen Exzenterwalze 19 gegen das jeweilige Magazin 7',9' gedrückt. Nicht abgebildete Varianten umfassen das Bewegen der wegschwenkbaren Klappen 16 mit einem Hebel, einem Stössel oder einem Schieber.

Damit die Objektträger 8,10 in den Magazinen 7',9' im wesentlichen spielfrei sitzen, umfasst jede dieser Lagerstellen 6 vorzugsweise eine Anpressfeder 13, welche elastisch eine Längskante 14 eines eingesetzten Objektträgers beaufschlägt. Zudem wird durch den Federdruck die jeweils gegenüberliegende Längskante 14 des Objektträgers 8,10 in einer durch das entsprechende Magazin 7',9' definierten Lage gehalten, welche geeignet ist, eine Referenz für den Ursprung eines Koordinatensystems zu definieren. Desgleichen ist der Probentisch 2 bevorzugt mit beweglichen Anpressteilen 39 in der Form von Rollen ausgestattet (vgl. Fig. 2), welche ebenfalls dieselbe Längskante 14 in einer definierten Lage festhalten, wodurch wiederum eine Referenz für den Ursprung des Koordinatensystems geschaffen wird.

Zumindest das Probenteil-Magazin 7' umfasst bevorzugt an einer der Einschubseite 15 gegenüber liegenden Ecke eine sich im wesentlichen über die ganze Stapelhöhe erstreckende Kontrollöffnung 21 zum Feststellen der An- oder Abwesenheit eines Objektträgers in einer bestimmten Lagerstelle 6. Die An- oder Abwesenheit eines Objektträgers 8,10 in einer bestimmten Lagerstelle 6 kann mit unterschiedlichen Methoden und Vorrichtungen festgestellt werden. So kann z.B. (vgl. Fig. 2) ein sich im Wesentlichen horizontal ausdehnender Lichtstrahl 23 bzw. eine Lichtschranke einer Kontrollvorrichtung 22 schräg durch die Magazine 7',9' gerichtet werden, falls die Kontrollöffnung 21 für diesen Lichtstrahl 23 durchlässig ist. Die Ablenkung, Streuung oder Abschwächung des Lichtstrahls 23 durch einen in einem Lagerplatz 6 anwesenden Objektträger 8,10 kann einfach mit einem lichtempfindlichen Sensor festgestellt werden. Während in Figur 2 eine Kontrollöffnung 21 in Form einer "abgeschnittenen Ecke" gezeigt ist, kann der Lichtstrahl 23 auch durch die Einschubseite 15 in die Magazine 7',9' gesendet werden und auf der entgegengesetzten, nicht abgeschnittenen Seite auf einen Sensor auftreffen; eine schräge Ausrichtung gegenüber der Transportrichtung der Objektträger 8,10 und/oder das Anbringen eines Umlenkspiegels (beides nicht gezeigt) ermöglichen ebenfalls eine Detektion der Objektträger in ihren Magazinen selbst bei angenähertem Probentisch 2.

Weitere Varianten zum Feststellen der An- oder Abwesenheit eines Objektträgers in einer bestimmten Lagerstelle 6 eines der beiden Magazine 7',9' beruhen beispielsweise auf der Basis eines kapazitiven Näherungsnachweises. Bevorzugt umfasst die Transportvorrichtung 3 des Laser Scanner-Geräts 1 einen Entladeschieber 31, der im wesentlichen parallel zu der Probenebene 49 durch die der Einschubseite 15 der Magazine 7',9' gegenüberliegende Seite eingreifend und zum Transportieren eines Proben-Objektträgers 8 oder eines Test-Objektträgers 10 aus seiner Lagerstelle 6 und aus der Einschubseite 15 heraus zum Probentisch 2 ausgebildet ist. Diese Transportvorrichtung 3 umfasst vorzugsweise zudem einen Ladeschieber 32, der zum Transportieren eines Proben-Objektträgers 8 oder eines Test-Objektträgers 10 aus dem Probentisch 2 und durch die Einschubseite 15 hinein zu einem Lagerplatz 6 in einem der Magazine 7',9' ausgebildet ist. Besonders bevorzugt wird, dass Ladeschieber 32 eine schwenkbare Klappe 33 umfasst, welche hochgeschwenkt werden und so über den im Probentisch 2 eingesetzten Objektträger 8,10 wegbewegt werden kann, ohne dass diese Klappe 33, welche um eine Achse 47 kippbar ist, den Objektträger berührt. So kann diese Klappe über den Objektträger 8,10 bewegt und hinter diesem abgesenkt werden, worauf der Objektträger von der Klappe 33 erfasst und aus dem Probentisch 2 gezogen werden kann. Das Hochschwenken der Klappe 33 ermöglicht das Bewegen des Probentisches 2 und des darin eingesetzten Objektträgers 8,10 zum Ort der Scanner-Einrichtung 72. Dieses Hochschwenken der Klappe 33 um die Kippachse 47 ermöglicht somit die freie Bewegung des Probentisches 2, ohne dass die Klappe 33 mit dem eingesetzten Objektträger 8,10 in Kontakt kommen kann. Bevorzugt ist der Antrieb 44 für die bewegliche Stellplatte 11, der Antrieb 45 für den Entladeschieber 31 und der Antrieb 46 für den Ladeschieber 32 jeweils ein Elektromotor, welcher von der Steuerung 40 gesteuert und überwacht wird.

Der in der Figur 2 gezeigte Probentisch 2 umfasst zum klemmenden Festhalten eines Objektträgers 8,10 in im wesentlichen paralleler Richtung zur Oberfläche der Objektträger gegen zumindest eine der Längskanten 14 des Objektträgers bewegliche Anpressteile 39, welche die Öffnungsbreite der Aufnahme 34 federnd begrenzen. Dabei sind die gegen zumindest eine der Längskanten 14 des Objektträgers beweglichen Anpressteile 39 bevorzugt als Rollen mit je einer im Wesentlichen vertikalen Achse ausgebildet. Bevorzugt überwacht bzw. regelt eine Steuerung 40 einen Motor 87, welche den Spindeltrieb 84 antreibt. Dadurch kontrolliert die Steuerung 40 die Bewegungen des Probentisches 2.

Figur 3 zeigt vertikale Ansichten der Objektträgermagazine mit geöffnetem Testobjekt-Magazin. Die Figur 3A zeigt dabei die Einschubseite der beiden Objektträgermagazine in einer Frontansicht vom Objekttisch her gesehen. Die vertikal bewegliche Stellplatte 11 ist auf der rechten Seite sichtbar und ihre Beweglichkeit mit einem Doppelpfeil markiert. Der Probenteil 7 ist gerade über dem Testteil 9 angeordnet, wobei das Probenteil-Magazin 7' mit hier acht in den Lagerstellen 6 ruhenden Proben-Objektträgern 8 axial über dem Testteil-Magazin 9' mit hier zwei Test-Objektträgern 10 befestigt ist. Die wegschwenkbare Klappe 16 des Probenteil-Magazins 7' ist geschlossen, währenddem die wegschwenkbare Klappe 16 des Testteil-Magazins 9' geöffnet ist und im Wesentlichen die ganze Breite der Einschubseite des Testteil-Magazins 9' frei gibt. Das Wegschwenken der wegschwenkbaren Klappe 16 des Testteil-Magazins 9' wird hier durch die Exzenterwalze 19 bewerkstelligt, welche auf die Winkelplatte 18 dieser Klappe drückt. Die Exzenterwalze 19 wird bevorzugt zumindest nahe der durch den Probentisch 2 definierten Probenebene 49 angeordnet, so dass trotz dem Verschieben der Aufbewahrungseinheit 4 in der Höhe immer die richtige Klappe 16 weggeschwenkt wird. Die Anpressfedern des Testteil-Magazins 9' sind gut zu sehen, wie sie federnd auf die eine Seitenkante 14 der Test-Objektträger 10 drücken.

Die Figur 3B zeigt die beiden gleichen Objektträgermagazine im Vertikalschnitt mit Blick gegen den Objekttisch hin. Die vertikal bewegliche Stellplatte 11 ist auf der linken Seite sichtbar und ihre Beweglichkeit mit einem Doppelpfeil markiert. Das Probenteil-Magazin 7' ist über den Schwalbenschwanz 43 der Stellplatte 11 geschoben und wird hier vom Testteil-Magazin 9' in einer konstanten Position an der Stellplatte 11 gehalten. Das Testteil-Magazin 9' ist hier mit der Stellplatte 11 fest verschraubt. Die Anpressfedern 13 des Probenteil-Magazins 7' und des Testteil-Magazins 9' sind hier gut auf der rechten Seite der Objektträgerstapel zu sehen.

Figur 4 zeigt vertikale Teilschnitte durch den Objekttisch 2 und dessen Querneigevorrichtung bzw. den Kippmechanismus 79, welcher einen motorisch angetriebenen Exzenter 80 und eine einseitige Drehachse 81 umfasst. Dieser Kippmechanismus 79 dient zum Ausrichten einer Probe bzw. eines Objektträgers 8,10 gegenüber einer Fokallinie 101, welche in einer Rasterebene 76 (vgl. Fig. 5) verläuft. Der Fokus des ersten Objektivs 57 und die Bewegungsrichtung 75 des Scanner-Kopfs 50 des Laser-Scanner Geräts 1 definieren diese Fokallinie 101. Diese Fokallinie 101 selbst definiert zusammen mit dem optischen Umlenkelement 56 des Scanner-Kopfs 50 die Rasterebene 76. Diese Rasterebene 76 wird somit durch die Bewegungsrichtung 75 des Scanner-Kopfs 50 und dessen optisches Umlenkelement 56 definiert. Diese Rasterebene 76 steht dabei im Wesentlichen senkrecht zu der Probenebene 49. Diese Fokallinie 101 ist definiert durch die Bewegungsrichtung 75 des Scanner-Kopfes 50 und den Fokalpunkt 65 des Scannerobjektivs 57 und liegt im richtig justierten Zustand des Geräts in der Probenebene 49. Die Drehachse 81 kann als eigentliche Achse ausgebildet sein (nicht gezeigt). Allerdings wird eine virtuelle Drehachse 81 bevorzugt, welche durch eine Stahlfeder 104 gebildet wird. Diese Stahlfeder 104 ist vorzugsweise mittels je eines Jochs 105 an dem Probentisch 2 oder an dem Auflageteil 103 angeschraubt. Diese Stahlfeder 104 bewirkt eine Gegenkraft zum Exzenter 80, so dass ein einfacher, spielfreier Kippmechanismus für das Auflageteil 103 des Probentischs 2 geschaffen wird.

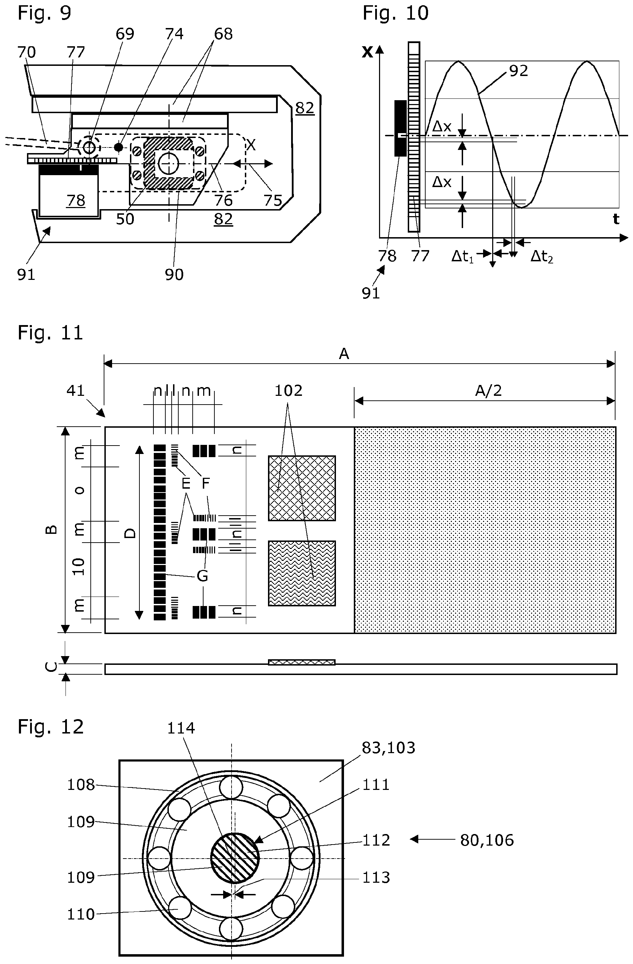

Die Figur 4A zeigt den Objekttisch 2 des Laser-Scanner Geräts 1 mit Blick gegen die Objektträgermagazine 7',9' und mit einem im geschlossenen Objekttisch 2 doppelt gehaltenen Objektträger 8. Der Probentisch 2 umfasst einen Kippmechanismus 79 mit einem motorisch angetriebenen Exzenter 80 und einer einseitigen Drehachse 81, mit welchem Kippmechanismus 79 ein Objektträger 8,10 oder eine Probe gegenüber einer Fokallinie 101 ausgerichtet werden kann. Ein Schnitt durch eine bevorzugte Ausführungsform einer solchen Exzentervorrichtung ist in der Fig. 12 gezeigt. Diese Fokallinie 101 liegt vorzugsweise in der Probenebene 49 und in einer Rasterebene 76, die der Scanner-Kopf 50 mit seinem optischen Umlenkelement 56 und seiner Bewegungsrichtung 75 definiert. Dabei steht die Rasterebene 76 vorzugsweise senkrecht zu der Probenebene 49 (vgl. auch Fig. 5). Mit dem Exzenter 80, der vorzugsweise motorisch angetrieben ist, kann die Querneigung des Objektträgers 8,10 bzw. des Probentisches 2 korrigiert werden, so dass die Fokallinie 101 der Scanner-Einrichtung 72 exakt in die Probenebene 49 zu liegen kommt.

Vorzugsweise ist die Probenebene 49 im Wesentlichen horizontal angeordnet. Die Aufnahme 34 des Probentisches 2 umfasst zwei einander gegenüber liegende Nuten 35 (vgl. Fig. 4B) zum Aufnehmen der beiden Längskanten 14 des gezeigten Proben-Objektträgers 8 oder eines (nicht gezeigten) Test-Objektträgers 10.

Der Probentisch 2 umfasst zum klemmenden Festhalten eines Objektträgers 8,10 in im Wesentlichen senkrechter Richtung zur Oberfläche der Objektträger vorzugsweise ein Auflageteil 103 mit zwei feststehenden Stegen 36. Zudem umfasst der Probentisch 2 einen federnd gegen diese Stege 36 beweglichen Backen 37 mit zwei aufstehenden Seitenwänden 38. Diese Seitenwände 38 definieren zusammen mit den Unterkanten der Stege 36 die Öffnungsweite der Nuten 35. Der bewegliche Backen 37 ist mit Federn 30 elastisch gegenüber dem Auflageteil 103 des Probentisches 2 abgestützt, so dass diese Federn 30 die beiden aufstehenden Seitenwände 38 des beweglichen Backens 37 federnd gegen die Unterseite des Objektträgers 8 drücken. Dadurch wird ein Proben-Objektträger bzw. ein Test-Objektträger 10, der bevorzugt zumindest annähernd die Masse eines Glasobjektträgers für die Lichtmikroskopie aufweist, in vertikaler Richtung klemmend im Probentisch 2 gehalten.

Der Probentisch 2 umfasst zum klemmenden Festhalten eines Objektträgers 8,10 in im Wesentlichen paralleler Richtung zur Oberfläche der Objektträger gegen zumindest eine der Längskanten 14 des Objektträgers 8 bewegliche Anpressteile 39, welche die Öffnungsbreite der Aufnahme 34 federnd begrenzen. Diese gegen zumindest eine der Längskanten 14 des Objektträgers 8 beweglichen Anpressteile 39 sind vorzugsweise als Rollen mit je einer im Wesentlichen vertikalen Achse ausgebildet. Die den Rollen 39 gegenüber liegende Nute 35 definiert einen Anschlag der Proben-Objektträger 8 bzw. Test-Objektträger 10, der sich zur Definition der Achse eines Koordinatensystems des Laser Scanner-Geräts 1 eignet. In eine Aussparung 98 eintauchend ist hier zudem ein Senkdorn 88 dargestellt, der beim Annähern des Probentisches 2 and die Aufbewahrungseinheit 4 in den Probentische eindringt und mit diesem Eindringen den Backen 37 und die Seitenwände 38 von den Stegen 36 des Auflageteils 103 wegzieht.

Die Figur 4B zeigt den Objekttisch 2 mit Blick von den Objektträgermagazinen 7',9' weg, mit geöffnetem Objekttisch 2, nach dem Entfernen bzw. vor dem Einschieben eines Objektträgers 8,10. Weil sich gerade kein Objektträger 8,10 im Probentisch 2 befindet, sind die rollenförmigen Anpressteile 39 in ihrer Extremposition. Aus dieser Extremposition werden die rollenförmigen Anpressteile 39 gegen den Druck von Federelementen verdrängt, sobald ein Objektträger 8,10 in den Probentisch 2 eingeschoben wird. Ebenfalls gut sichtbar ist hier, wie der Senkdorn 88 an einer Rampe 89 aufläuft, so dass der bewegliche Backen 37 des Probentischs 2 etwas heruntergezogen und so das Einschieben eines Objektträgers 8,10 in die Aufnahme 34 des Probentischs 2 ermöglicht wird.

Figur 5 zeigt einen vertikalen Teilschnitt durch den Objekttisch sowie dessen Höhenverstellung und Längsneigevorrichtung. Die durch den Probentisch 2 definierte Probenebene 49 ist in im wesentlichen der Z-Richtung (hier in der Vertikalen) verstellbar, indem der an einer Aufhängung 83 linear befestigte und linear verschiebbare Probentisch 2 zusammen mit dieser Aufhängung 83 auf einem motorisch angetriebenen Exzenter 106 aufliegt und schwenkbar an einem Rahmen 82 einseitig befestigt ist. Ein Schnitt durch eine bevorzugte Ausführungsform einer solchen Exzentervorrichtung ist in der Fig. 12 gezeigt. Wird der Exzenter 106 etwas gedreht, so hebt oder senkt sich entsprechend die Aufhängung 83 mit dem Probentisch 2. Mit dieser Bewegung kann die Ebene des Probentischs 2, also die Probenebene 49, mit der Ebene einer Lagerstelle 6 im Probenteil-Magazin 7' oder im Testteil-Magazin 9' der Aufbewahrungseinheit 4 in Übereinstimmung gebracht werden, so dass ein linearer Transfer zwischen einem dieser Magazine 7',9' und dem Probentische erfolgen kann. Vorzugsweise wird das entsprechende Magazin in der Z-Richtung durch eine Verschiebung der beweglichen Stellplatte 11 bereitgestellt, so dass nur eine allfällige Feinabstimmung mit dem Exzenter 106 der Probentischaufhängung 83 erfolgen muss. Mit dem Exzenter 106, der vorzugsweise motorisch angetrieben ist, kann die Längsneigung des Objektträgers 8,10 bzw. des Probentisches 2 korrigiert werden, so dass die Fokallinie 101 der Scanner-Einrichtung 72 exakt in die Probenebene 49 zu liegen kommt. Tatsächlich findet mit der Korrektur der Längsneigung auch eine Verschiebung in der Höhe, also entlang einer Z-Achse, statt.

Zum Zweck eines solchen Objektträgertransfers wird der Probentisch 2 vorzugsweise möglichst weit der Aufbewahrungseinheit 4 in der im Wesentlichen horizontalen Y-Richtung angenähert. Beim Annähern des Probentischs 2 an die Aufbewahrungseinheit 4 dringt ein Senkdorn 88 in den Probentisch 2 ein und senkt dadurch eine Auflage der Aufnahme 34 des Probentischs 2 zum Aufnehmen eines Objektträgers ab. Dadurch wird der Probentisch 2 zur Aufnahme eines Objektträgers 8,10 bereit gestellt. Diese Annäherung geschieht bevorzugt mittels eines an der Aufhängung 83 gelagerten Spindeltriebes 84 und entlang einer Linearführung 85. Der Spindeltrieb 84 ist über eine flexible Kupplung 86 mit dem Motor 87 verbunden, so dass eine exakte Linearführung des Probentischs 2 in im Wesentlichen der Y-Richtung auch dann erfolgen kann, wenn die Probenebene 49 einen geringen Neigungswinkel zur Horizontalen einschliesst. Ziel der Verstellbarkeit des Probentischs 2 mit dem Exzenter 80 ist hauptsächlich das Ausrichten der Probenebene 49 zu einer Fokallinie 101, die durch einen in der X-Richtung (hier senkrecht zur Zeichnungsebene) schwingenden Scanner-Kopf 50 des Laser Scanner-Geräts 1 definiert wird. Dieser Scanner-Kopf 50 bewegt sich sehr schnell in der X-Richtung und auf der Oberseite einer Trennplatte 99. Diese Trennplatte weist eine Rasteröffnung 90 auf. Bevorzugt ist der Scanner-Kopf 50 in diese Rasteröffnung 90 eingesenkt, so dass die von ihm ausgehenden Lichtstrahlen die Probe in geringem Abstand treffen, und dass der Scanner-Kopf 50 die von der Probe kommenden Fluoreszenzemission so effektiv wie möglich aufnehmen und an einen Detektor 61 oder an mehrere Detektoren 61,61' weiter leiten kann.

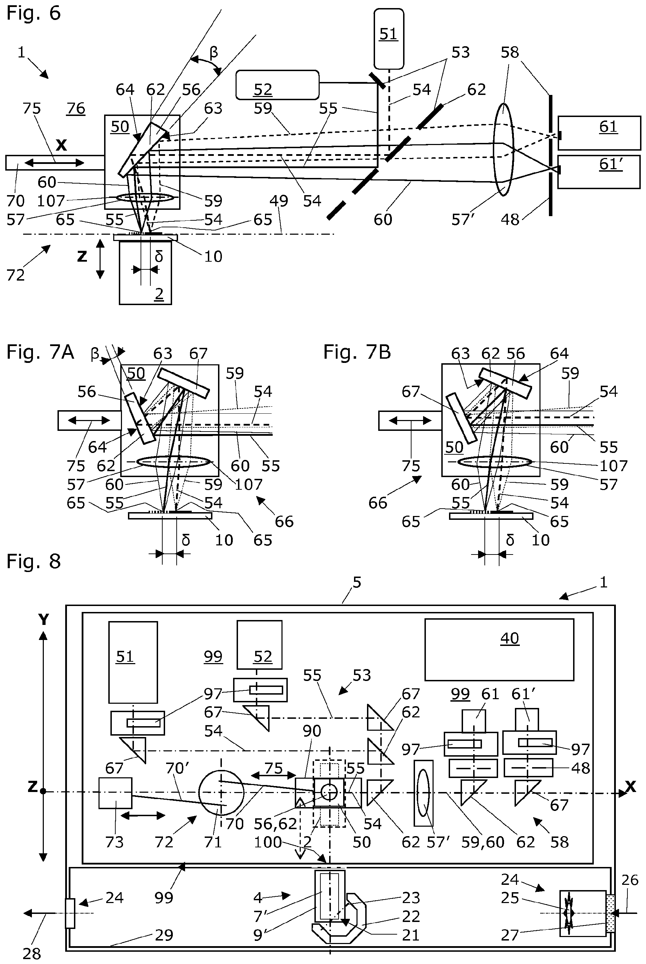

Die Figur 6 zeigt eine Prinzipskizze mit wesentlichen optischen Elementen des Laser Scanner-Geräts 1 mit einem Scanner-Kopf 50 gemäss einer ersten Ausführungsform. Das Laser Scanner-Gerät 1 zum Abbilden und/oder Vermessen von auf Objektträgern befindlichen, mit zwei unterschiedlichen Fluoreszenzfarbstoffen behandelten, fluoreszierenden Proben umfasst einen motorisch verfahrbaren Probentisch 2 mit einer Aufnahme für einen Proben-Objektträger 10 in einer Probenebene 49. Ein erster Laser 51 und ein zweiter Laser 52 sowie ein erstes optisches System 53 stellen zwei parallel zueinander ausgerichtete und parallel zu dieser Ebene 49 verlaufenden Laserstrahlen 54,55 unterschiedlicher Wellenlänge bereit. Eine Scanner-Einrichtung 72 umfasst einen parallel zu dieser Ebene 49 hin und her beweglichen Scanner-Kopf 50 mit einem optischen Umlenkelement 56 zum Umlenken der Laserstrahlen 54,55 zu der Probe hin. Ein erstes Objektiv 57 fokussiert die Laserstrahlen 54,55 auf der Probe in der Ebene 49. Dieses erste Objektiv 57 weist eine Hauptebene 107 auf, welche vorzugsweise parallel zur Probenebene 49 angeordnet ist.

Ein zweites optisches System 58 leitet die durch die Laserstrahlen 54,55 an der Probe ausgelösten und durch das erste Objektiv 57 und das Umlenkelement 56 in eine zur Ebene 49 im Wesentlichen parallelen Richtung umgelenkten Emissionsstrahlenbündel 59,60 zu Detektoren 61,61'. Zwei solche Detektoren 61,61' erfassen die von den Proben kommenden Emissionsstrahlenbündel 59,60 unterschiedlicher Wellenlänge. Die Öffnungen der Blenden 48 weisen bevorzugt einen grösseren Durchmesser als die fokussierten Emissionsstrahlenbündel 59,60 auf, sie können jedoch auch den Dimensionen der fokussierten Emissionsstrahlenbündel 59,60 im wesentlichen entsprechen, wodurch ein konfokales Laser Scanner-Gerät 1 geschaffen würde.

Das optische Umlenkelement 56 des erfindungsgemässen Laser Scanner-Geräts 1 umfasst vorzugsweise einen keilförmigen Dichroidspiegel 62 mit in einem Zwischenwinkel β zueinander angeordneten vorderen und hinteren dichroidischen Oberflächen 63,64. Dabei ist der keilförmige Dichroidspiegel 62 so eingestellt, dass die beiden Laserstrahlen 54,55 an je einer der Oberflächen 63,64 reflektiert werden. Dabei bewirkt der keilförmige Dichroidspiegel 62 durch den Zwischenwinkel β eine räumliche Trennung der beiden resultierenden Fokuspunkte 65 und der beiden in Richtung der Detektoren 61,61' gelenkten Emissionsstrahlenbündel 59,60. Die beiden resultierenden Fokuspunkte 65,65' sind in einem Abstand δ zu einander in der Probenebene 49 angeordnet. In dieser in der Figur 6 gezeigten ersten Ausführungsform ist das optische Umlenkelement 56 ein keilförmiger Dichroidspiegel 62. Bevorzugt ist dabei die hintere dichroidische Oberfläche 64 des keilförmigen Dichroidspiegels 62 zum Spiegeln eines ersten Laserstrahls 54 und dessen vordere dichroidische Oberfläche 63 zum Spiegeln eines zweiten Laserstrahls 55 und der beiden Emissionsstrahlenbündel 59,60 ausgebildet.

Das zweite optische System 58 umfasst an sich bekannte Elemente wie ein zweites Objektiv 57', das die eintretenden Emissionsstrahlenbündel 59,60 in je einem Punkt fokussiert. Das zweite optische System 58 umfasst zudem eine Blende 48, deren Öffnungen bevorzugt wesentlich grösser sind als die diese Öffnungen durchtretenden, fokussierten Emissionsstrahlenbündel 59,60. Gemäss einer besonders bevorzugten Ausführungsform beruht das Laser Scanner-Gerät 1 somit auf einem nicht-konfokalen Abbildungsprinzip. Diese fokussierten Emissionsstrahlenbündel 59,60 treffen danach auf je einem Detektor 61,61' auf, welcher die Intensität der jeweiligen Emissionsstrahlenbündel 59,60 misst. Dieses zweite Objektiv 57' kann als Achromat oder als einfache Linse ausgebildet sein.

Die Figur 7 zeigt Prinzipskizzen des Scanner-Kopfes des erdfindungsgemässen Laser-Scanner Geräts. Dabei zeigt Figur 7A eine zweite Ausführungsform des Scanner-Kopfes 50, bei dem das optische Umlenkelement 56 als Pentaspiegelanordnung 66 mit einem keilförmigen Dichroidspiegel 62 und einem einfachen Spiegel 67 ausgebildet ist. Wie schon in der ersten Ausführungsform (vgl. Fig. 6) ist die hintere dichroidische Oberfläche 64 des keilförmigen Dichroidspiegels 62 zum Spiegeln eines ersten Laserstrahls 54 und dessen vordere dichroidische Oberfläche 63 zum Spiegeln eines zweiten Laserstrahls 55 und der beiden Emissionsstrahlenbündel 59,60 ausgebildet.

Die Figur 7B zeigt eine dritte Ausführungsform des Scanner-Kopfes 50, bei dem das optische Umlenkelement 56 ebenfalls als Pentaspiegelanordnung 66 mit einem keilförmigen Dichroidspiegel 62 und einem einfachen Spiegel 67 ausgebildet ist. Im Unterschied zu der zweiten Ausführungsform (vgl. Fig. 7A) ist die Anordnung des Dichroidspiegels 62 und des einfachen Spiegels 67 vertauscht. Dabei ist die hintere dichroidische Oberfläche 64 des keilförmigen Dichroidspiegels 62 zum Spiegeln eines ersten Laserstrahls 54 und dessen vordere dichroidische Oberfläche 63 zum Spiegeln eines zweiten Laserstrahls 55 sowie der ersten und zweiten Emissionsstrahlenbündel 59,60 ausgebildet.

Bei einer weiteren alternativen Ausführungsform des Scanner-Kopfes 50 (nicht gezeigt) ist das optische Umlenkelement 56 ebenfalls als Pentaspiegelanordnung 66 mit einem keilförmigen Dichroidspiegel 62 und einem einfachen Spiegel 67 ausgebildet. Dabei ist die hintere dichroidische Oberfläche 64 des keilförmigen Dichroidspiegels 62 zum Spiegeln eines ersten Laserstrahls 54 und der beiden Emissionsstrahlenbündel 59,60 und dessen vordere dichroidische Oberfläche 63 zum Spiegeln eines zweiten Laserstrahls 55 ausgebildet.

Gemäss einer weiteren, nicht gezeigten, alternativen Ausführungsform ist das optische Umlenkelement 56 ebenfalls als Pentaspiegelanordnung 66 ausgebildet. Im Gegensatz zu der in der Fig. 7A dargestellten, an sich ähnlichen Ausführungsform, wird der keilförmige Dichroidspiegel 62 durch einen ersten einfachen Dichroidspiegel ersetzt, welcher an die Stelle der vorderen Oberfläche 63 tritt. An die Stelle der hinteren Oberfläche 64 des keilförmigen Dichroidspiegels 62 tritt ein zweiter einfacher Dichroidspiegel oder ein Vollspiegel. Der zweite einfache Dichroidspiegel oder der Vollspiegel schliessen jeweils einen entsprechenden Zwischenwinkel mit dem ersten einfachen Dichroidspiegel ein. Diese Variationen der Refexions- und Transmissionseigenschaften der Pentaspiegelanordnung 66 gelten prinzipiell auch für Ausführungsformen mit einfachen, im Wesentlichen unter 45° angeordneten Spiegeln.

Es versteht sich von selbst, dass die eben beschriebenen Ausführungsformen und weitere Kombinationen beliebig vertauscht werden können. Allerdings wird die erste Ausführungsform gemäss der Figur 6, bei der das optische Umlenkelement 56 als keilförmiger Dichroidspiegel 62 ausgebildet ist oder die zweite Ausbildungsform gemäss der Figur 7A, bei der das optische Umlenkelement 56 als Pentaspiegelanordnung 66 mit einem keilförmigen Dichroidspiegel 62 und einem einfachen Spiegel 67 ausgebildet ist, bevorzugt. Für alle Pentaspiegelanordnungen 66 gilt, dass die vordere Oberfläche 63 und der einfache Spiegel 67 bevorzugt einen Winkel von 22.5° einschliessen.

Die Figur 8 zeigt einen horizontalen Teilschnitt durch ein Laser Scanner-Gerät 1 mit wesentlichen optischen Elementen eines ersten optischen Systems 53 zum Bereistellen von Anregungslicht und eines zweiten optischen Systems 58 zum Erfassen der ausgelösten Fluoreszenzemission der Proben, einer Scanner-Einrichtung 72 mit Scanner-Kopf 50 und einem Objekttisch 2 mit einer Objektträgermagazine 7',9' umfassenden Aufbewahrungseinheit 4. Bevorzugt sind alle wesentlichen optischen Elemente und die Scanner-Einrichtung 72 auf einer gemeinsamen Trennplatte 99 und der Probentisch 2 unterhalb dieser Trennplatte 99 (vgl. Fig. 5) angeordnet.

Die wesentlichen optischen Elemente des ersten optischen Systems 53 sind in einem Gehäuse 5 angeordnet und umfassen zumindest einen ersten Laser 51 und optional einen zweiten Laser 52, Filterräder 97 für die von dem oder den Lasern 51,52 ausgehenden Laserstrahlen 54,55 sowie eine Anzahl Dichroidspiegel 62 und einfacher Spiegel 67 zum Umlenken der Laserstrahlen 54,55 aus den Lasern 51,52 in eine zur X-Richtung parallelen Richtung.

Die wesentlichen optischen Elemente des zweiten optischen Systems 58 sind im gleichen Gehäuse 5 angeordnet und umfassen einen oder mehrere Detektoren 61,61' diesen vorgeordnete Filterräder 97 und Blenden 48 für die von den Proben ausgehenden Emissionsstrahlenbündel 59,60 sowie eine Anzahl Dichroidspiegel 62 und einfacher Spiegel 67 zum Umlenken der Emissionsstrahlenbündel 59,60 aus einer zur X-Richtung parallelen Richtung in Richtung der Detektoren 61,61'.

Die Scanner-Einrichtung 72 umfasst einen Antrieb 71, den Scanner-Kopf 50 und vorzugsweise einen Gegenschwinger 73 mit einer dem Scanner-Kopf 50 gleichen oder zumindest äquivalenten Masse zur Impulskompensation. Scanner-Kopf und Gegenschwinger sind mittels Pleuelstangen 70,70' mit dem Antrieb 71 verbunden und an je einer präzisen Linearführung (nicht gezeigt) befestigt. Durch den Antrieb 71 wird der Scanner-Kopf 50 in eine schnelle hin und her Bewegung in einer Bewegungsrichtung 75 (vgl. ausgefüllte Doppelpfeile) gebracht, welche gleichzeitig die Scan-Achse 75 definiert. Dabei führt der Gegenschwinger 73 immer eine entgegengesetzte Bewegung aus, wodurch es gelingt, die Trennplatte 99 und damit das ganze Laser Scanner-Gerät 1 trotz der bevorzugt hohen Rastergeschwindigkeit des Scanner-Kopfes 50 ruhig zu halten. Die Scan-Achse 75 ist parallel zur X-Achse oder fällt gerade mit dieser zusammen. Der Scanner-Kopf 50 umfasst ein optisches Umlenkelement 56, welches z.B. als Dichroidspiegel 62 ausgebildet ist. Dieses Umlenkelement 56 kann als Vollspiegel, Prisma, Pentaprisma, Pentaspiegel-Konfiguration oder als Kombination aus diesen hier aufgeführten Elementen ausgebildet sein. Dieses Umlenkelement 56 lenkt einerseits die Laserstrahlen 54,55 des ersten optischen Systems 53 auf die Proben auf dem Probentisch 2 und andererseits die von den Proben ausgesandten Emissionsstrahlenbündel 59,60 in Richtung des zweiten optischen Systems 58.

Senkrecht zur X-Achse und Scan-Achse 75 verläuft die Bewegungsrichtung des unterhalb der Trennplatte 99 angeordneten Probentischs 2 in Richtung der Y-Achse. Vorzugsweise in einem Bereich ausserhalb der Trennplatte 99 ist die Aufbewahrungseinheit 4 mit den in einem Probenteil-Magazin 7' gelagerten Proben-Objektträgern 8 und den in einem Testteil-Magazin 9' gelagerten Test-Objektträgern 10 angeordnet. Die Anwesenheit eines Objektträgers 8,10 in einer bestimmten Lagerstelle 6 dieser Magazine 7',9' wird bevorzugt mittels einer Kontrollvorrichtung 22 überprüft. Diese Kontrollvorrichtung umfasst vorzugsweise einen Lichtstrahl 23, der zu diesen Kontrollzwecken eine Kontrollöffnung 21 durchdringt.

Vorzugsweise weist das Laser Scanner-Gerät 1 eine Lüftungseinrichtung 24 mit einem Ventilator 25, einem Lufteinlass 26 mit einem Aktivkohlefilter 27 und einem Luftauslass 28 auf, um die Exposition der Fluoreszenzfarbstoffe an oder in den im Probenteil-Magazin 7' gelagerten Proben gegenüber Ozon zu reduzieren. Besonders bevorzugt umfasst die Lüftungseinrichtung 24 ein zusätzliches Gehäuse 29, welches den Probenteil 7 mit den Proben-Objektträgern 8 im Wesentlichen umschliesst. Dieses zusätzliche Gehäuse 29 ist bevorzugt innerhalb des Gehäuses 5 des Laser Scanner-Geräts 1 angeordnet und als wegschwenkbarer, zumindest im Wesentlichen abgeschlossener Bereich ausgebildet. Dabei wird besonders bevorzugt, dass die Lüftungseinrichtung 24 in diesem zusätzlichen Gehäuse 29 untergebracht und von der Lüftung des Laser Scanner-Geräts 1 unabhängig ist.

Ein Service-Fachmann kann beispielsweise dieses zusätzliche Gehäuse 29 öffnen und wenn nötig einen oder mehrere Testobjektträger im sonst unzugänglichen Teststeil-Magazin 9' einsetzen oder ersetzen. Bevorzugt ist dieses zusätzliche Gehäuse 29 von der Trennplatte 99 wegschwenkbar ausgebildet und weist eine Ladeöffnung 100 auf, durch welche jeweils ein Objektträger 8,10 auf den Probentisch 2 oder in ein Magazin 7',9' hinein transportiert werden kann. Vorzugsweise ist der Probenteil 7 axial über dem Testteil 9 der Aufbewahrungseinheit 4 angeordnet und wird zusammen mit dem zusätzlichen Gehäuse 29 oder zumindest zusammen mit einem Teil dieses zusätzlichen Gehäuses (das damit für den Service Fachmann geöffnet wird) weggeschwenkt. Sollte während eines Transports zwischen dem Probentisch 2 und der Aufbewahrungseinheit 4 ein Proben-Objektträger 8 sich verklemmen oder zerbrechen, so kann das Bedienungspersonal den defekten Proben-Objektträger 8 entfernen, ohne dass ein Zugang zu den Test-Objektträgern 10 geschaffen würde.

Besonders bevorzugt wird, dass ein Service Fachmann einen oder mehrere Test-Objektträger 10 individuell in ein Probenteil-Magazin 7' einschiebt und dieses Probenteil-Magazin 7' auf dem ordentlichen Wege in das Laser Scanner-Gerät 1 einsetzt. Eine entsprechend programmierte Firmware in der Steuerung 40 des Laser Scanner-Geräts 1 wird dann vorzugsweise per Eingabe einer persönlichen Identifikationsnummer (PIN) des Service Fachmanns bzw. per Eingabe eines Codes für die Service-Fachleute aktiviert. Die so aktivierte Firmware befähigt die Steuerung 40 des Laser Scanner-Geräts 1, den automatischen Transport jedes dieser Test-Objektträger 10 aus dem Probenteil-Magazin 7' auf den Probentisch 2 und weiter in eine Lagerstelle 6 des Testteil-Magazins 9' zu steuern. Gemäss diesem besonders bevorzugten Verfahren wird jeder manuelle Eingriff in das Testteil-Magazin 9' verunmöglicht. Nur in besonderen Notfällen könnte ein Service-Fachmann mit geeigneten Werkzeugen die vorzugsweise in dem zusätzlichen Gehäuse 29 eingeschlossenen Test-Objektträger 10 herausholen. Vorzugsweise ist die Steuerung 40 des erfindungsgemässen Laser Scanner-Geräts 1 zum Steuern einer automatisierten, internen und an Hand von Test-Objektträgern 10 ausgeführten Instrumentprüfung ausgebildet.

Vorzugsweise ist der Probentisch 2 zum Verfahren bis unmittelbar vor die Aufbewahrungseinheit 4 motorisch angetrieben ausgebildet und dessen Lage und Bewegung durch die Steuerung 40 kontrolliert. Dasselbe gilt auch für die Stellplatte 11 der Aufbewahrungseinheit 4 zum Auswählen des zu untersuchenden Objektträgers 8,10 und für die drehbare Exzenterwalze 19 zum Wegschwenken der Klappen 16. Zudem wird bevorzugt, dass auch der Entladeschieber 31 zum Transportieren eines Objektträgers 8,10 zu dem Probentisch 2 für das automatisierte Auswählen und Bereitstellen eines Proben-Objektträgers 8 oder Test-Objektträgers 10 auf dem Probentisch 2 motorisch angetrieben ausgebildet und dessen Lage und Bewegung durch die Steuerung 40 kontrolliert sind. Dasselbe gilt auch für den Ladeschieber 32 zum Transportieren eines Objektträgers 8,10 zu der Aufbewahrungseinheit 4 beim Zurücklegen derselben in eine Lagerstelle 6 des Probenteil-Magazins 7' oder des Testteil-Magazins 9'.

Die Figur 9 zeigt einen horizontalen Teilschnitt durch den Scanner-Kopf 50 des Laser Scanner-Geräts 1 mit dem zugeordneten Weggeber 91. An einem Rahmen 82 ist eine Linearführung 68 befestigt, an welcher der Scanner-Kopf 50 in der X-Richtung und in eine Rasteröffnung 90 eintauchend, beweglich angeordnet ist. In diesem Fall fällt die X-Achse mit der Bewegungsrichtung 75 des Scanner-Kopfes 50 zusammen, wobei diese Bewegungsrichtung 75 gemeinsam mit den zur unter dem Scanner-Kopf 50 angeordneten Probe (nicht gezeigt) hin umgelenkten ersten und zweiten Laserstrahlen 54,55 eine Rasterebene 76 definiert. Diese Rasterebene 76 steht bevorzugt senkrecht zu der Probenebene 49. Der Scanner-Kopf 50 umfasst einen Massstab 77, der in einem Abstand zu einem fixierten, linearen Messsystem 78 des Laser Scanner-Geräts 1 und in dieser Rasterebene 76 angeordnet ist. Der Probentisch 2 ist vorzugsweise in einer rechtwinklig zur X-Achse 75 angeordneten Y-Richtung eines Kartesischen Koordinatensystems linear verfahrbar ausgebildet und motorisch angetrieben.

Der Scanner-Kopf mit allen seinen optischen Elementen, Befestigungsmitteln, dem Massstab 77 und einem Teil der Linearführung weist einen Massenschwerpunkt 74 auf. Dieser Massenschwerpunkt 74 ist in der Bewegungsrichtung 75 des Scanner-Kopfs 50 auf einer Linie mit einem Pleuelangriffspunkt 69 angeordnet, welche die Pleuelstange 70 des Scanner-Kopfes 50 mit dem Antrieb 71 verbindet. Dieser Pleuelangriffspunkt 69 kann z.B. als Achse ausgebildet sein; es wird jedoch bevorzugt, den Pleuelangriffspunkt als Kreuzfedergelenk auszubilden.

Die Figur 10 zeigt eine Prinzipskizze des Weggebers 91 für den Scanner-Kopf 50 und dessen nichtlineare Bewegung beim Scannen als X/t - Diagramm. Dieses X/t - Diagramm weist auf die unterschiedliche Zeitdauer ($\Delta t_1$; $\Delta t_2$) für die Erfassung eines Pixels ($\Delta x$) je nach der Position auf der X-Achse hin. Das Weggeber-Signal 92 entspricht in etwa einer Sinuskurve, welche ihre Maxima an den Extrempunkten (Endpunkten) einer Scan-Linie des Laser-Kopfes 50 aufweist. Wegen der Umkehr der Scan-Richtung in diesen Endpunkten und der dadurch verlangsamten Bewegung braucht der Scanner-Kopf in der Nähe dieser Wendepunkte eine länger Zeit ($\Delta t_2$) für die selbe Wegstrecke ($\Delta x$), als mit der erreichbaren Höchstgeschwindigkeit des Scanner-Kopfes in einer Mittelstellung zwischen den Wendepunkten, bei der dieselbe Wegstrecke ($\Delta x$) in einer viel kürzeren Zeit ($\Delta t_1$) durchlaufen wird. Das Pixel ($\Delta x$) sowie der entsprechende Ort und Zeitpunkt werden miteinander korreliert und der zu diesem Zeitpunkt gemessenen Intensität zugeordnet. Die Summe aller gemessenen Pixel ergibt dann ein zweidimensionales Bild. Die Korrelation des Ortes dieser Pixel in der Probenebene 49 mit der Intensität der an diesem Ort gemessenen Fluoreszenzintensität bestimmt in Kombination mit der Pixelgrösse letztendlich die Auflösung des Laser-Scanner Geräts 1.

Die Figur 11 zeigt einen Test-Objektträger 10, der das Format eines Standardobjektträgers für die Lichtmikroskopie aufweist und der ausschliesslich im Wesentlichen lichtstabile Teststrukturen 41 umfasst. Als "im wesentlichen lichtstabil" wird eine Teststruktur bezeichnet, wenn diese bei normaler Benutzung, d.h. bei der während Testverfahren üblicherweise auftretenden Strahlenbelastung keinen messbaren Schaden erleidet. Eine minutenlange oder gar stundenlange Bestrahlung eines Test-Objektträgers 10 mit einem Laserstrahl 54,55, bzw. das Liegelassen eines Test-

EP 2 259 125 B1

Objektträgers 10 an einem ungeschützten Ort für längere Zeit (beispielsweise gegenüber dem Umgebungslicht exponiert) wird nicht als "normale Benutzung" bezeichnet.

Die folgende Tabelle 1 gibt einen Überblick über die gebräuchlichsten Glasobjektträger für die Lichtmikroskopie:

| Typ | Inch: 1 x 3 Zoll | Metrisch: 25 x 75 mm |
|---|---|---|
| Dimensionen: | | |
| Länge x Breite | 76.2 mm x 25.4 mm | 76 mm x 25 mm |
| (Toleranzen) | (± 0.5 mm) | (± 0.5 mm) |
| Dicke: | | |
| "standard" | 1.02 mm (± 0.05 mm) | 1.02 mm (± 0.05 mm) |
| "dick" | 1.2 mm (± 0.1 mm) | |
| Behandlung: | | |
| Ecken | scharf, gefast | scharf, gefast |
| Kanten | scharf, gefast | scharf, gefast |
| Oberflächen | blank, sandgestrahlt, auf einer oder beiden Seiten | blank, sandgestrahlt, auf einer oder beiden Seiten |

Der in der Figur 11 abgebildete, beispielhafte Test-Objektträger 10 weist eine Fläche mit einer Länge A von 75 mm einer Breite B von 25 mm sowie eine Dicke C von 1 mm auf. Die eine Hälfte der Fläche A/2 ist (beispielsweise mittels Schleifen) mattiert.

Die andere Hälfte weist ein bevorzugtes Linien-Muster mit einer Breite D von 20 mm auf. Dieses Linienmuster besteht bevorzugt aus einer mittels Maske erstellten, aufgedampften Chromschicht. Die Grossbuchstaben E, F, G bezeichnen eine bestimmte Anzahl Linienpaare pro Millimeter (lp/mm) und die Kleinbuchstaben l, m, n, o bezeichnen bestimmte Masse wie folgt:

$$E = 50 \ lp/mm; \ F = 100 \ lp/mm; \ G = 10 \ lp/mm;$$

$$l = 0.5 \ mm; \ m = 2 \ mm; \ n = 1 \ mm; \ o = 7 \ mm.$$

Alle diese Teststrukturen 41 sind bevorzugt ausschliesslich im Wesentlichen lichtstabil und nicht fluoreszierend.

Die Figur 12 zeigt einen Vertikalschnitt durch eine Exzentervorrichtung 80,106 zum Einstellen der durch den Scanner-Kopf 50 bestimmten Fokallinie 101 gegenüber der Probenebene 49 auf dem Probentische 2. Jede Exzentervorrichtung 80,106 ist vorzugsweise motorisch angetrieben und umfasst ein Kugellager, welches einen stehenden Aussenring 108, einen drehbaren Innenring 109 und eine Anzahl Wälzkörper bzw. Kugeln 110 umfasst. Vorzugsweise umfasst ein solches Wälzlager auch einen Käfig, der wegen der Übersichtlichkeit der Darstellung in der Fig. 12 weggelassen wurde. Der drehbare Innenring 109 der speziell bevorzugten Wälzlager weist eine Exzenterbohrung 111 auf, in welcher eine motorisch angetriebene Antriebsachse 112 gegenüber dem Innenring 109 unverdrehbar befestigt ist. Wird nun diese Antriebsachse 112, welche ortsfest und drehbar an einer Aufhängung (nicht gezeigt) befestigt ist, um einen bestimmten Winkel gedreht, so wird der stehende, am zu bewegenden Bauteil befestigte Aussenring 108 angehoben oder abgesenkt. Dieses Anheben oder Absenken richtet sich nach dem Exzentermass 113, welches den Abstand des Zentrums der Antriebsachse 112 vom Drehzentrum 114 des Kugellagers definiert, nach der momentanen gegenseitigen Anordnung von diesen beiden Zentren sowie nach der Drehrichtung der Antriebsachse. Der Vorteil dieser Exzenteranordnungen 80,106 liegt unter anderem darin, dass eine praktisch stufenlose und reibungsfreie Höhenverstellung ermöglicht wird. Es ist klar, dass ein kleineres Exzentermass 113 eine geringere maximale Verstellbarkeit der Exzentervorrichtungen 80,106 zulässt, die Feinheit dieser Verstellbarkeit aber erhöht. Der Aussenring 108 kann an der zu bewegenden Vorrichtung 83,103 unbeweglich befestigt sein; dies ist jedoch nicht zwingend notwendig, so dass der Aussenring 108 auch gegenüber der zu bewegenden Vorrichtung 83,103 beweglich angeordnet sein kann. Das Exzentermass 113 kann in beliebiger Raumrichtung angeordnet sein, so dass es nicht zwingend eine horizontale Abweichung definiert, wie dies in Fig. 12 dargestellt ist.

Das erfindungsgemässe Laser Scanner-Gerät 1 ist zur Abbildung und Vermessung von zweidimensionalen Objekten ausgelegt. Dementsprechend muss eine Empfindlichkeitskalibrierung genau für diese "flaschen" Objekte gültig sein. Zweidimensionale Fluoreszenzproben, die sowohl lichtstabil als auch chemisch über lange Zeiträume beständig sind, sind jedoch nicht oder nur sehr schwer herzustellen.

Dagegen können Objekte, die eine dreidimensionale Ausdehnung haben, vermessen werden. Weil die an solchen dreidimensionalen Objekten gemessenen Intensitäten aber stark von der Tiefenschärfe des Laser Scanner-Geräts und von der jeweiligen Positionierung im Fokus (d.h. in der Z-Richtung) abhängen, sind solche dreidimensionalen Objekte nicht direkt zur Kalibrierung von Signalintensität oder Empfindlichkeit geeignet. Als sogenanntes "Bulk-Material" existieren jedoch Materialien 102, wie beispielsweise in Kunststoff eingebettete Fluoreszenzfarbstoffe oder dotierte Gläser, die weitestgehend lichtstabil und chemisch beständig sind.

Die Ausrichtung des Probentischs 2 und der Aufbewahrungseinheit des Laser Scanner-Geräts 1 im Raum ist eigentlich beliebig. Dasselbe gilt für die gut ausgewuchtete bzw. mittels Gegenschwinger 73 impulskompensierte Scanner-Einrichtung 72. Auch kann die Probenebene 49 des Probentisches 2 im Wesentlichen horizontal aber kopfüber hängend angeordnet sein. Allerdings wird eine stehende Anordnung des Probentischs gemäss den Figuren 1 und 2 bzw. 4 bis 7 bevorzugt.

Gleiche Merkmale oder Elemente des erfindungsgemässen Laser Scanner-Geräts 1 sind jeweils mit gleichen Bezugszeichen versehen, auch wenn diese Elemente nicht in allen Fällen im Detail beschrieben sind.

Zudem wird ein erfindungsgemässes Verfahren zum Betrieb eines solchen Laser Scanner-Geräts 1 zum Abbilden und/oder Vermessen von auf Objektträgern befindlichen, mit Fluoreszenzfarbstoffen behandelten, fluoreszierenden Proben offenbart. Dieses Verfahren ist dadurch gekennzeichnet, dass als optisches Umlenkelement 56 vorzugsweise ein keilförmiger Dichroidspiegel 62 mit in einem Zwischenwinkel $\beta$ zueinander angeordneten vorderen und hinteren dichroidischen Oberflächen 63,64 verwendet wird, wobei der keilförmige Dichroidspiegel 62 so eingestellt ist, dass die beiden Laserstrahlen 54,55 an je einer der Oberflächen 63,64 reflektiert werden, und wobei der keilförmige Dichroidspiegel 62 durch den Zwischenwinkel $\beta$ sowohl eine räumliche Trennung der beiden resultierenden Fokuspunkte 65 als auch der beiden in Richtung der Detektoren 61,61' gelenkten Emissionsstrahlenbündel 59,60 bewirkt.

Bei diesem Verfahren wird bevorzugt ein als Pentaspiegelanordnung 66 mit einem keilförmigen Dichroidspiegel 62 und einem einfachen Spiegel 67 ausgebildetes, optisches Umlenkelement 56 verwendet, wobei dieser Pentaspiegelanordnung 66 Verkippungen des Scanner-Kopfes 50 um eine zur Scan-Achse 75 rechtwinklig verlaufende Y-Achse so korrigiert, dass die resultierenden Fokuspunkte 65 ihre aktuelle Position in der Probenebene 49 nicht verändern.

Speziell bevorzugt wird, dass der Scanner-Kopf 50 mit seinem optischen Umlenkelement 56 und seiner Bewegungsrichtung 75 eine Rasterebene 76 definiert, welche senkrecht zu der Probenebene 49 steht, wobei die Auslenkung des Scanner-Kopfs 50 in der X-Achse 75 mit einem Massstab 77 gemessen wird, welcher in einem Abstand zu einem linearen Messsystem 78 des Laser Scanner-Geräts 1 und in dieser Rasterebene 76 angeordnet ist. Dieser Massstab 77 ist bevorzugt in der Rasterebene 76 oder zumindest in der unmittelbaren Nähe dieser Rasterebene 76 angeordnet. Dieser Massstab 77 ist bevorzugt zudem in der Hauptebene 107 des ersten Objektivs 57 (vgl. Fig. 6 und 7) oder zumindest in der unmittelbaren Nähe dieser Hauptebene 107 angeordnet.

Das erfindungsgemässe Verfahren zum Betrieb eines solchen Laser Scanner-Geräts 1 zum Abbilden und/oder Vermessen von auf Objektträgern befindlichen, mit Fluoreszenzfarbstoffen behandelten, fluoreszierenden Proben ermöglicht eine nominale Grenzauflösung beim Abbilden und/oder Vermessen von auf Objektträgern befindlichen, mit zwei unterschiedlichen Fluoreszenzfarbstoffen behandelten, fluoreszierenden Proben, die 2.5 $\mu$m oder besser ist.

Eine Instrumentprüfung, die ausgewählt ist aus einer Gruppe, die das Durchführen von Intensitäts- und Empfindlichkeitstests, von Cross-Talk-, Auflösungs- und Dynamik-Messungen, von Laser-Rausch- und -Intensitätsmessungen und von Filter-Blockungs- und Filter-Transmissionsprüfungen sowie das Überprüfen der Justage von optischen Komponenten, der geometrischen Bildparameter und der Bildausrichtung umfasst, ist bevorzugt. Geometrische Bildparameter sind z.B. der Abbildungsmassstab sowie das Feststellen und parametrisieren von Verzeichnungen. Auch Überlagerungen von zwei oder mehr Anregungskanälen und/oder Detektionskanälen können überprüft werden. Des Weiteren ist das Laser Scanner-Gerät 1 zur Kontrolle der Autofokusfunktion befähigt.

Bevorzugt wird eine Empfindlichkeitsprüfung ohne fluoreszierende Substanz durchgeführt und zwar mit zumindest einem Test-Objektträger 10, der zumindest annähernd das Format eines Standardobjektträgers für die Lichtmikroskopie aufweist und der ausschliesslich im Wesentlichen lichtstabile Teststrukturen 41 umfasst. Alternativ oder ergänzend zu der eben erwähnten Empfindlichkeitsprüfung an im wesentlichen zweidimensionalen Teststrukturen 41 ohne fluoreszierende Substanz kann auch eine Intensitätsmessung an dreidimensionalen, fluoreszierenden Teststrukturen durchgeführt werden:

An der Stelle eines normalen Scans bzw. eines normalen abgerasterten Feldes in XY-Richtung und damit parallel zur Probenebene 49 wird ein Scan in XZ-Richtung (Z-Profil) durchgeführt, indem ein Feld abgerastert wird, welches zumindest im wesentlichen senkrecht auf der Probenebene 49 steht. Das direkt gemessene Z-Profil stellt die gemessene Intensität in Abhängigkeit von der Z-Koordinate dar (I=I(Z)). An der Stelle dieses Z-Profils wird nun vorzugsweise die erste Ableitung der entsprechenden Intensitäten (dI=dI(z)/dz) berechnet, womit wieder eine zweidimensionale Intensitätsverteilung vorliegt. Das Maximum der ersten Ableitung ist somit ein Mass für die vom Laser Scanner-Gerät 1 an der Oberfläche der Probe gemessenen Intensität.

Die für dieses Kalibrierverfahren geeigneten Materialien 102 können zusammen mit den aufgedampften Linienmustern auf dem gleichen Test-Objektträger 10 oder auf einem separaten Test-Objektträger angeordnet werden. Diese flachen, dreidimensionalen Materialien 102 weisen bevorzugt eine zur Probenebene 49 parallele Ausdehnung von 2 x 2 mm bis 10 x 10 mm auf und haben eine Dicke von etwa 0.1 bis 2 mm, bevorzugt eine Dicke von ca. 1mm (vgl. Fig. 11).

Ein Fachmann kennt die Funktion eines Dichroidspiegels als optisches Element, das für einen Teil des Wellenlängenspektrums durchlässig ist und einen anderen Teil dieses Wellenlängenspektrums spiegelt. Der Fachmann spricht hier deshalb von einer wellenlängenselektiven Transmission und Reflektion. Es sind zudem Laser bekannt, die Licht mit unterschiedlichen Wellenlängen emittieren können und auch solche Laser (Hybridlaser genannt), die eine Diodenlaser-Kavität (z.B. rot mit 635 nm Wellenlänge) und eine Festkörper-Kavität (z.B. grün mit 532 nm Wellenlänge) in einem einzigen Gehäuse umfassen.

Bezugzeichen:

| 1 | Laser Scanner-Gerät | 23 | Lichtstrahl |
|---|---|---|---|
| 2 | Probentisch | 24 | Lüftungseinrichtung |
| 3 | Transportvorrichtung | 25 | Ventilator |
| 4 | Aufbewahrungseinheit | 26 | Lufteinlass |
| 5 | Gehäuse | 27 | Aktivkohlefilter |
| 6 | Lagerstelle | 28 | Luftauslass |
| 7 | Probenteil | 29 | zusätzliches Gehäuse |
| 7' | Probenteil-Magazin | 30 | Feder |
| 8 | Proben-Objektträger | 31 | Entladeschieber |
| 9 | Testteil | 32 | Ladeschieber |
| 9' | Testteil-Magazin | 33 | schwenkbare Klappe |
| 10 | Test-Objektträger | 34 | Aufnahme |
| 11 | bewegliche Stellplatte | 35 | gegenüber liegende Nuten |
| 12 | Lagerstege | 36 | feststehende Stege |
| 13 | Anpressfeder | 37 | beweglicher Backen |
| 14 | Längskante Objektträger | 38 | aufstehende Seitenwände |
| 15 | Einschubseite | 39 | bewegliche Anpressteile |
| 16 | wegschwenkbare Klappe | 40 | Steuerung |
| 17 | Achse | 41 | lichtstabile Teststrukturen |
| 18 | Winkelplatte | 42 | Handgriff |
| 19 | Exzenterwalze | 43 | Schwalbenschwanz |
| 20 | Sperrplatte | 44 | Antrieb zu 11 |
| 21 | Kontrollöffnung | 45 | Antrieb zu 31 |
| 22 | Kontrollvorrichtung | 46 | Antrieb zu 32 |
| 47 | Kippachse von 33 | 77 | Massstab |
| 48 | Blende | 78 | lineares Messsystem |
| 49 | Ebene, Probenebene | 79 | Kippmechanismus |
| 50 | Scanner-Kopf | 80 | Exzenter, Exzentervorrichtung |
| 51 | erster Laser | 81 | Drehachse |
| 52 | zweiter Laser | 82 | Rahmen |
| 53 | erstes optisches System | 83 | Aufhängung |
| 54 | erster Laserstrahl | 84 | Spindeltrieb |
| 55 | zweiter Laserstrahl | 85 | Linearführung |
| 56 | optisches Umlenkelement | 86 | Kupplung |
| 57 | erstes Objektiv | 87 | Motor |
| 57' | zweites Objektiv | 88 | Senkdorn |
| 58 | zweites optisches System | 89 | Rampe |

(fortgesetzt)

| 59 | erstes Emissionsstrahlenbündel | 90 | Rasteröffnung |
|---|---|---|---|
| | | 91 | Weggeber |
| 60 | zweites Emissionsstrahlenbündel | 92 | Weggeber-Signal |
| | | 97 | Filterrad |
| 61 | erster Detektor | 98 | Aussparung |
| 61' | zweiter Detektor | 99 | Trennplatte |
| 62 | Dichroidspiegel | 100 | Ladeöffnung |
| 63 | vordere Oberfläche | 101 | Fokallinie |
| 64 | hintere Oberfläche | 102 | flache Materialien |
| 65 | resultierende Fokuspunkte | 103 | Auflageteil von 2 |
| 66 | Pentaspiegelanordnung | 104 | Stahlfeder |
| 67 | einfacher Spiegel | 105 | Joch |
| 68 | Linearführung | 106 | Exzenter, Exzentervorrichtung |
| 69,69' | Pleuelangriffspunkt | 107 | Hauptebene des Objektivs 57 |
| 70,70' | Pleuel, Pleuelstange | 108 | Aussenring |
| 71 | Antrieb | 109 | Innenring |
| 72 | Scanner-Einrichtung | 110 | Wälzköper, Kugeln |
| 73 | Gegenschwinger | 111 | Exzenterbohrung |
| 74 | Massenschwerpunkt | 112 | Antriebsachse |
| 75 | Bewegungsrichtung X-Achse, Scan-Achse | 113 | Exzentermass |
| | | 114 | Drehzentrum des Kugellagers |
| 76 | Rasterebene | | |

## Patentansprüche

1. Laser Scanner-Gerät (1) zum Abbilden und/oder Vermessen von auf Objektträgern befindlichen, mit zwei unterschiedlichen Fluoreszenzfarbstoffen behandelten, fluoreszierenden Proben, umfassend:

(a) einen motorisch verfahrbaren Probentisch (2) mit einer Aufnahme (34) für Objektträger (8,10) in einer Probenebene (49);
(b) mindestens einen Laser (51,52) und ein erstes optisches System (53) zum Bereitstellen von zwei parallel zueinander ausgerichteten und parallel zu dieser Ebene (49) verlaufenden Laserstrahlen (54,55) unterschiedlicher Wellenlänge;
(c) eine Scanner-Einrichtung (72), die einen parallel zu dieser Ebene (49) und in einer Bewegungsrichtung (75) hin und her beweglichen Scanner-Kopf (50) mit einem optischen Umlenkelement (56) zum Umlenken der Laserstrahlen (54,55) zu der Probe hin umfasst;
(d) ein erstes Objektiv (57) zum Fokussieren der Laserstrahlen (54,55) auf der Probe in der Ebene (49);
(e) ein zweites optisches System (58) zum Weiterleiten von durch die Laserstrahlen (54,55) an der Probe ausgelösten und durch das erste Objektiv (57) und das Umlenkelement (56) in eine zur Ebene (49) im wesentlichen parallelen Richtung umgelenkten Emissionsstrahlenbündel (59,60) zu Detektoren (61,61'), und
(f) zwei Detektoren (61,61') zum Erfassen der von den Proben kommenden Emissionsstrahlenbündel (59,60) unterschiedlicher Wellenlänge,

**dadurch gekennzeichnet, dass** die Scanner-Einrichtung (72) einen Antrieb (71) und einen Gegenschwinger (73) umfasst, wobei der Scanner-Kopf (50) und der Gegenschwinger (73) mittels Pleuelstangen (70,70') mit dem Antrieb (71) verbunden und an je einer Linearführung (68) verschiebbar befestigt sind, wobei der Antrieb (71) dazu ausgebildet ist, den Scanner-Kopf (50) in eine schnelle hin und her Bewegung in der Bewegungsrichtung (75) zu bringen welche gleichzeitig eine Scan-Achse (75) definiert, wobei der Gegenschwinger (73) zur Impulskompensation mittels einer entgegengesetzten Bewegung zum Scanner-Kopf (50) eine Masse hat, die zumindest äquivalent zur Masse des Scanner-Kopfs (50) ist; und wobei das optische Umlenkelement (56) als Dichroidspiegel (62), Prisma, Pentaprisma, Pentaspiegelanordnung (66) oder eine Kombination derselben ausgebildet ist,
**und dass** der Scanner-Kopf (50) mit seinem optischen Umlenkelement (56) und seiner Bewegungsrichtung (75) eine Rasterebene (76) definiert, wobei der Scanner-Kopf (50) einen Massstab (77) umfasst, der in einem Abstand zu einem linearen Messsystem (78) des Laser Scanner-Geräts (1) und in dieser Rasterebene (76) angeordnet ist.

2. Laser Scanner-Gerät (1) nach Anspruch 1, **dadurch gekennzeichnet, dass** der Scanner-Kopf (50) einen Massenschwerpunkt (74) und einen Pleuelangriffspunkt (69) aufweist, an welchem der Pleuel (70) mit dem Scanner-Kopf (50) verbunden ist, wobei der Pleuelangriffspunkt (69) des Scanner-Kopfs (50) in der Bewegungsrichtung (75) auf einer Linie mit dem Massenschwerpunkt (74) des Scanner-Kopfs (50) angeordnet ist.

3. Laser Scanner-Gerät (1) nach einem der vorhergehenden Ansprüche, **dadurch gekennzeichnet, dass** das optische Umlenkelement (56) eine räumliche Trennung der beiden resultierenden Fokuspunkte (65) um einen Abstand δ zueinander und eine räumliche Trennung der beiden in Richtung der Detektoren (61,61') gelenkten Emissionsstrahlenbündel (59,60) bewirkt, wobei diese beiden Emissionsstrahlenbündel (59,60) nicht-parallel zueinander sind.

4. Laser Scanner-Gerät (1) nach einem der vorhergehenden Ansprüche, **dadurch gekennzeichnet, dass** der Scanner-Kopf (50) einen Massstab (77) umfasst, der zumindest in der Nähe der Hauptebene (107) des ersten Objektivs (57) angeordnet ist.

5. Laser Scanner-Gerät (1) nach einem der vorhergehenden Ansprüche, **dadurch gekennzeichnet, dass** die Probenebene (49) im Wesentlichen horizontal angeordnet ist.

6. Laser Scanner-Gerät (1) nach Anspruch 1, **dadurch gekennzeichnet, dass** das optische Umlenkelement (56) ein keilförmiger Dichroidspiegel (62) ist oder als Pentaspiegelanordnung (66) mit einem keilförmigen Dichroidspiegel (62) und einem einfachen Spiegel (67) ausgebildet ist.

7. Laser Scanner-Gerät (1) nach Anspruch 6, **dadurch gekennzeichnet, dass** die hintere dichroidische Oberfläche (64) des keilförmigen Dichroidspiegels (62) zum Spiegeln eines ersten Laserstrahls (54) und dessen vordere dichroidische Oberfläche (63) zum Spiegeln eines zweiten Laserstrahls (55) und der beiden Emissionsstrahlenbündel (59,60) ausgebildet ist.

8. Laser Scanner-Gerät (1) nach Anspruch 6, **dadurch gekennzeichnet, dass** die hintere dichroidische Oberfläche (64) des keilförmigen Dichroidspiegels (62) zum Spiegeln eines ersten Laserstrahls (54) und eines ersten Emissionsstrahlenbündels (59) und dessen vordere dichroidische Oberfläche (63) zum Spiegeln eines zweiten Laserstrahls (55) und eines zweiten Emissionsstrahlenbündels (60) ausgebildet ist.

9. Laser Scanner-Gerät (1) nach einem der vorhergehenden Ansprüche, **dadurch gekennzeichnet, dass** die Bewegungsrichtung (75) des Scanner-Kopfs (50) eine X-Achse oder Scan-Achse definiert und der Probentisch (2) in einer dazu rechtwinklig angeordneten Y-Richtung eines Kartesischen Koordinatensystems linear verfahrbar ist.

10. Laser Scanner-Gerät (1) nach einem der vorhergehenden Ansprüche, **dadurch gekennzeichnet, dass** der Probentisch (2) einen Kippmechanismus (79) mit einem motorisch angetriebenen Exzenter (80) und einer einseitigen Drehachse (81) umfasst, mit welchem Kippmechanismus (79) ein Objektträger (8,10) oder eine Probe gegenüber einer Fokallinie (101) ausgerichtet werden kann.

11. Laser Scanner-Gerät (1) nach einem der vorhergehenden Ansprüche, **dadurch gekennzeichnet, dass** es einen Rahmen (82) und eine Aufhängung (83) umfasst, an welcher der Probentisch (2) mittels eines Spindeltriebes (84) linear in einer Y-Richtung beweglich ist, wobei diese Aufhängung (83) schwenkbar am Rahmen (82) befestigt ist und auf einem vom Rahmen (82) getragenen, motorisch angetriebenen Exzenter (80) aufliegt, mittels welchem die Aufnahme (34) des Probentisches und damit die Probenebenebene (49) in einer im wesentlichen senkrechten Z-Richtung verstellbar ist.

12. Verfahren zum Betrieb eines Laser Scanner-Geräts (1) zum Abbilden und/oder Vermessen von auf Objektträgern befindlichen, mit zwei unterschiedlichen Fluoreszenzfarbstoffen behandelten, fluoreszierenden Proben, welches folgende Schritte umfasst:

(a) Bereitstellen eines motorisch verfahrbaren Probentisches (2) mit einer Aufnahme (34) für Objektträger (8,10) in einer Probenebene (49);
(b) Bereitstellen von zwei parallel zueinander ausgerichteten und parallel zu dieser Ebene (49) verlaufenden Laserstrahlen (54,55) unterschiedlicher Wellenlänge mit mindestens einem Laser (51,52) und einem ersten optischen System (53);

(c) Umlenken der Laserstrahlen (54,55) zu der Probe hin mit einem optischen Umlenkelement (56) einer Scanner-Einrichtung (72), die einen parallel zu dieser Ebene (49) und in einer Bewegungsrichtung (75) hin und her beweglichen Scanner-Kopf (50) umfasst;

(d) Fokussieren der Laserstrahlen (54,55) auf der Probe in der Ebene (49) mit einem ersten Objektiv (57);

(e) Weiterleiten von durch die Laserstrahlen (54,55) an der Probe ausgelösten und durch das erste Objektiv (57) und das Umlenkelement (56) in eine zur Ebene (49) im wesentlichen parallelen Richtung umgelenkten Emissionsstrahlenbündel (59,60) zu Detektoren (61,61') mit einem zweiten optischen System (58), und

(f) Erfassen der von den Proben kommenden Emissionsstrahlenbündel (59,60) unterschiedlicher Wellenlänge mit zwei Detektoren (61,61'),

**dadurch gekennzeichnet, dass** die Scanner-Einrichtung (72) einen Antrieb (71) und einen Gegenschwinger (73) umfasst, wobei der Scanner-Kopf (50) und der Gegenschwinger (73) mittels Pleuelstangen (70,70') mit dem Antrieb (71) verbunden und an je einer Linearführung (68) verschiebbar befestigt sind, **dass** der Scanner-Kopf (50) mit dem Antrieb (71) in eine schnelle hin und her Bewegung in der Bewegungsrichtung (75) gebracht wird, die gleichzeitig eine Scan-Achse (75) definiert, wobei der Gegenschwinger (73), der eine Masse hat, die zur Impulskompensation zumindest äquivalent zur Masse des Scanner-Kopfs (50) ist, eine entgegengesetzte Bewegung zum Scanner-Kopf (50) ausführt; **dass** der Scanner-Kopf (50) mit seinem optischen Umlenkelement (56) und seiner Bewegungsrichtung (75) eine Rasterebene (76) definiert, wobei die Auslenkung des Scanner-Kopfs (50) in der X-Achse (75) mit einem Massstab (77) gemessen wird, welcher in einem Abstand zu einem linearen Messsystem (78) des Laser Scanner-Geräts (1) in dieser Rasterebene (76) angeordnet ist,

**und dass** das optische Umlenkelement (56) als Dichroidspiegel (62), Prisma, Pentaprisma, Pentaspiegelanordnung (66) oder eine Kombination derselben ausgebildet ist.

**13.** Verfahren nach Anspruch 12, **dadurch gekennzeichnet, dass** das optische Umlenkelement (56) eine räumliche Trennung der beiden resultierenden Fokuspunkte (65) um einen Abstand δ zueinander und eine räumliche Trennung der beiden in Richtung der Detektoren (61,61') gelenkten Emissionsstrahlenbündel (59,60) bewirkt, und wobei diese beiden Emissionsstrahlenbündel (59,60) nicht-parallel zueinander sind.

**14.** Verfahren nach Anspruch 13, **dadurch gekennzeichnet, dass** ein als Pentaspiegelanordnung (66) mit einem keilförmigen Dichroidspiegel (62) und einem einfachen Spiegel (67) ausgebildetes, optisches Umlenkelement (56) verwendet wird, wobei dieser Pentaspiegelanordnung (66) Verkippungen des Scanner-Kopfes (50) um eine zur Scan-Achse (75) rechtwinklig verlaufende Y-Achse so korrigiert, dass die resultierenden Fokuspunkte (65) ihre aktuelle Position in der Probenebene (49) nicht verändern.

**15.** Verfahren nach einem der Ansprüche 12 bis 14, **dadurch gekennzeichnet, dass** die Auslenkung des Scanner-Kopfs (50) in der X-Achse (75) mit einem Massstab (77) gemessen wird, welcher zumindest in der Nähe der Hauptebene (107) des ersten Objektivs (57) angeordnet ist.

**16.** Verfahren nach einem der Ansprüche 12 bis 15, **dadurch gekennzeichnet, dass** die nominale Grenzauflösung beim Abbilden und/oder Vermessen von auf Objektträgern befindlichen, mit zwei unterschiedlichen Fluoreszenzfarbstoffen behandelten, fluoreszierenden Proben 2.5 μm oder besser ist.

## Claims

**1.** Laser scanner device (1) for imaging and/or measuring fluorescent samples, which are located on sample slides and are treated with two different fluorescent dyes, comprising:

(a) a motor-driveable sample table (2) with a receptacle (34) for sample slides (8, 10) in a sample plane (49);

(b) at least one laser (51, 52) and a first optical system (53) for providing two laser beams (54, 55) of different wavelengths aligned parallel to one another and parallel to said plane (49);

(c) a scanner device (72) comprising a scanner head (50) having an optical deflection element (56) for deflecting the laser beams (54, 55) to the sample, said scanner head (50) being movable back and forth parallel to said plane (49) and in a direction of movement (75);

(d) a first objective (57) for focusing the laser beams (54, 55) on the sample in the plane (49);

(e) a second optical system (58) for redirecting emission beam bundles (59, 60) to detectors (61, 61'), which beams are triggered by the laser beams (54, 55) on the sample and deflected by the first objective (57) and the deflection element (56) in a direction essentially parallel to the plane (49), and

(f) two detectors (61, 61') for detecting the emission beam bundles (59, 60) of different wavelengths coming from the samples,

**characterized in that** the scanner device (72) comprises a drive (71) and a counter-oscillator (73), wherein the scanner head (50) and the counter-oscillator (73) are connected by means of connecting rods (70, 70') to the drive (71) and are displaceably fastened in each case to a linear guide (68), wherein the drive (71) is designed to bring the scanner head (50) into a fast reciprocating motion in the direction of movement (75), which simultaneously defines a scanning axis (75), wherein the counter-oscillator (73), for the purpose of impulse compensation by means of a movement in an opposite direction to the scanner head (50), has a mass at least equivalent to the mass of the scanner head (50), and wherein the optical deflection element (56) is configured as a dichroic mirror (62), prism, pentaprism, pentamirror arrangement (66) or a combination thereof,
**and that** the scanner head (50) defines a grid plane (76) with its optical deflection element (56) and its direction of movement (75), wherein the scanner head (50) has a scale (77) which is arranged at a distance from a linear measurement system (78) of the laser scanner device (1) and in said grid plane (76).

2.  Laser scanner device (1) according to claim 1, **characterized in that** the scanner head (50) has a centre of mass (74) and a connecting rod attack point (69) at which the connecting rod (69) is connected to the scanner head (50), wherein the connecting rod attack point (69) of the scanner head (50) is arranged in the direction of movement (75) on a line with the centre of mass (74) of the scanner head (50).

3.  Laser scanner device (1) according to one of the preceding claims, **characterized in that** the optical deflection element (56) produces a spatial separation of the two resulting focal points (65) by a distance 5 from one another and a spatial separation of the two emission beam bundles (59, 60) deflected in the direction of the detectors (61, 61'), wherein said two emission beam bundles (59, 60) are non-parallel with respect to each other.

4.  Laser scanner device (1) according to one of the preceding claims, **characterized in that** the scanner head (50) comprises a scale (77) which is arranged at least in the vicinity of the main plane (107) of the first objective (57).

5.  Laser scanner device (1) according to one of the preceding claims, **characterized in that** the sample plane (49) is arranged essentially horizontally.

6.  Laser scanner device (1) according to claim 1, **characterized in that** the optical deflection element (56) is a wedge-shaped dichroic mirror (62) or is formed as a pentamirror arrangement (66) with a wedge-shaped dichroic mirror (62) and a simple mirror (67).

7.  Laser scanner device (1) according to claim 6, **characterized in that** the rear dichroic surface (64) of the wedge-shaped dichroic mirror (62) is formed for mirroring a first laser beam (54) and the front dichroic surface (63) thereof for mirroring a second laser beam (55) and the two emission beam bundles (59, 60).

8.  Laser scanner device (1) according to claim 6, **characterized in that** the rear dichroic surface (64) of the wedge-shaped dichroic mirror (62) is formed for mirroring a first laser beam (54) and a first emission beam bundle (59) and its front dichroic surface (63) for mirroring a second laser beam (55) and a second emission beam bundle (60).

9.  Laser scanner device (1) according to one of the preceding claims, **characterized in that** the movement direction (75) of the scanner head (50) defines an X axis or scanning axis, and the sample table (2) is arranged at a right angle thereto and in a linearly displaceable manner in a Y direction of a Cartesian coordinate system.

10. Laser scanner device (1) according to one of the preceding claims, **characterized in that** the sample table (2) comprises a tilting mechanism (79) with a motor-driven eccentric (80) and a single-sided rotational axis (81), with which tilting mechanism (79) a sample slide (8, 10) or a sample can be aligned in relation to a focal line (101).

11. Laser scanner device (1) according to one of the preceding claims, **characterized in that** it comprises a frame (82) and a suspension (83) on which the sample table (2) is linearly movable in a Y direction by means of a spindle drive (84), wherein said suspension (83) is pivotably fastened to the frame (82) and rests on a motor-driven eccentric (80) supported by the frame (82), by means of which the receptacle (34) of the sample table and thus the flat sample plane (49) can be adjusted in a substantially vertical Z direction.

12. Method for operating a laser scanner device (1) for imaging and/or measuring fluorescent samples which are located on sample slides and are treated with two different fluorescent dyes, comprising the following steps:

(a) providing a motor-driveable sample table (2) with a receptacle (34) for sample slides (8, 10) in a sample plane (49);
(b) providing two laser beams (54, 55) of different wavelengths aligned parallel to one another and parallel to said plane (49) by means of at least one laser (51, 52) and a first optical system (53);
(c) deflecting the laser beams (54, 55) to the sample with an optical deflection element (56) of a scanner device (72), which comprises a scanner head (50) which can be moved back and forth parallel to said plane (49) and in a direction of movement (75);
(d) focusing the laser beams (54, 55) on the sample in the plane (49) with a first objective (57);
(e) redirecting emission beam bundle (59, 60), which are triggered by the laser beams (54, 55) on the sample and deflected by the first objective (57) and the deflection element (56) into a direction substantially parallel to the plane (49), to detectors (61 , 61') with a second optical system (58), and
(f) detecting the emission beam bundles (59, 60) of different wavelengths coming from the samples with two detectors (61, 61'),

**characterized in that** the scanner device (72) comprises a drive (71) and a counter-oscillator (73), wherein the scanner head (50) and the counter-oscillator (73) are connected by means of connecting rods (70, 70') to the drive (71), and are mounted so as to be displaceable each on a respective linear guide (68), **that** the scanner head (50) is brought with the drive (71) into a fast reciprocating motion in the direction of movement (75), which simultaneously defines a scanning axis (75), wherein the counter-oscillator (73), which has a mass that is at least equivalent to the mass of the scanner head (50) for impulse compensation, performs an opposing movement to the scanner head (50); **that** the scanner head (50) defines a grid plane (76) with its optical deflection element (56) and its direction of movement (75), wherein the deflection of the scanner head (50) in the X axis (75) is measured with a scale (77), which is arranged in said grid plane (76) at a distance from a linear measuring system (78) of the laser scanner device (1), **and that** the optical deflection element (56) is configured as a dichroic mirror (62), prism, pentaprism, pentamirror arrangement (66) or a combination thereof.

13. Method according to claim 12, **characterized in that** the optical deflection element (56) produces a spatial separation of the two resulting focal points (65) by a distance δ from one another and a spatial separation of the two emission beam bundles (59, 60) directed in the direction of the detectors (61, 61'), and wherein said two emission beam bundles (59, 60) are not parallel to one another.

14. Method according to claim 13, **characterized in that** an optical deflecting element (56), which is designed as a pentamirror arrangement (66) with a wedge-shaped dichroic mirror (62) and a simple mirror (67), is used, wherein said pentamirror arrangement (66) corrects tiltings of the scanner head (50) about a Y axis which extends at a right angle to the scanning axis (75), such that the resulting focal points (65) do not change their current position in the sample plane (49).

15. Method according to one of claims 12 to 14, **characterized in that** the deflection of the scanner head (50) in the X axis (75) is measured with a scale (77) which is arranged at least in the vicinity of the main plane (107) of the first objective (57).

16. Method according to one of the claims 12 to 15, **characterized in that** the nominal limit resolution during the imaging and/or measuring of fluorescent samples which are disposed on sample slides and are treated with two different fluorescent dyes is 2.5 μm or better.

## Revendications

1. Appareil scanner laser (1) pour représenter et/ou mesurer des échantillons fluorescents installés sur des porte-objets, traités avec deux colorants fluorescents différents, comprenant :

(a) un porte-échantillon (2) pouvant être déplacé de façon motorisée avec un logement (34) pour le porte-objet (8, 10) dans un plan d'échantillon (49) ;
(b) au moins un laser (51, 52) et un premier système optique (53) pour fournir deux faisceaux laser (54, 55) de longueur d'onde différente orientés parallèlement l'un à l'autre et s'étendant parallèlement au plan (49) ;
(c) une installation de scanner (72) qui comprend une tête de scanner (50) mobile dans un mouvement de va-et-vient parallèle au plan (49) et dans un sens de déplacement (75) avec un élément de renvoi optique (56) pour renvoyer les faisceaux laser (54, 55) vers l'échantillon ;

(d) un premier objectif (57) pour focaliser les faisceaux laser (54, 55) sur l'échantillon dans le plan (49) ;

(e) un deuxième système optique (58) pour transmettre aux détecteurs (61, 61') les faisceaux d'émission émis par les faisceaux laser (54, 55) sur l'échantillon et renvoyés par le premier objectif (57) et l'élément de renvoi (56) dans une direction essentiellement parallèle au plan (49) ;

(f) deux détecteurs (61, 61') pour détecter les faisceaux d'émissions (59, 60) de longueurs d'onde différentes provenant des échantillons,

**caractérisé en ce que** l'appareil scanner (72) comprend un entraînement (71) et un contre-oscillateur (73), la tête de scanner (50) et le contre-oscillateur (73) étant raccordés à l'entraînement (71) par le biais de bielles (70, 70') et étant fixés de façon mobile chaque à un guidage linéaire (68), l'entraînement (71) étant conçu pour amener la tête de scanner (50) dans un mouvement rapide de va-et-vient dans le sens de déplacement (75), lequel définit en même temps un axe de balayage (75), le contre-oscillateur (73) possédant une masse pour compenser l'impulsion à l'aide d'un mouvement contraire vers la tête de scanner (50), qui est au moins équivalente à la masse de la tête de scanner (50) ; et l'élément de renvoi optique (56) étant réalisé sous la forme d'un miroir dichroïque, d'un prisme, d'un pentaprisme, d'un agencement à pentamiroir (66) ou d'une combinaison de ces derniers, et **en ce que** la tête de scanner (50) définit avec son élément de renvoi optique (56) et son sens de déplacement (75) un plan d'encliquetage (76), la tête de scanner (50) comprenant une échelle (77) qui est agencée à distance d'un système de mesure linéaire (78) de l'appareil scanner laser (1) et dans ce plan d'encliquetage (76).

2. Appareil scanner laser (1) selon la revendication 1, **caractérisé en ce que** la tête de scanner (50) présente un centre de gravité (74) et un point d'engagement de bielle (69) au niveau duquel la bielle (70) est raccordée à la tête de scanner (50), le point d'engagement de bielle (69) de la tête de scanner (50) étant agencé dans le sens de déplacement (75) sur une ligne avec le centre de gravité (74) de la tête de scanner (50).

3. Appareil scanner laser (1) selon l'une des revendications précédentes, **caractérisé en ce que** l'élément de renvoi optique (56) entraîne une séparation spatiale des deux points de focalisation obtenus (65) à une distance $\delta$ et une séparation spatiale des deux faisceaux d'émission (59, 60) renvoyés en direction des détecteurs (61, 61'), ces deux faisceaux d'émission (59, 60) n'étant pas parallèles entre eux.

4. Appareil scanner laser (1) selon l'une des revendications précédentes, **caractérisé en ce que** la tête de scanner (50) comprend une échelle (77) qui est agencée au moins à proximité du plan principal (107) du premier objectif (57).

5. Appareil scanner laser (1) selon l'une des revendications précédentes, **caractérisé en ce que** le plan d'échantillon (49) est agencé essentiellement horizontal.

6. Appareil scanner laser (1) selon la revendication 1, **caractérisé en ce que** l'élément de renvoi optique (56) est un miroir dichroïque cunéiforme (62) ou bien est réalisé sous la forme d'un agencement à pentamiroir (66) avec un miroir dichroïque cunéiforme (62) et un miroir simple (67).

7. Appareil scanner laser (1) selon la revendication 6, **caractérisé en ce que** la surface dichroïque arrière (64) du miroir dichroïque cunéiforme (62) est conçue pour réfléchir un premier faisceau laser (54) et la surface dichroïque avant (63) de ce dernier pour réfléchir un deuxième faisceau laser (55) et les deux faisceaux d'émission (59, 60).

8. Appareil scanner laser (1) selon la revendication 6, **caractérisé en ce que** la surface dichroïque arrière (64) du miroir dichroïque cunéiforme (62) est conçue pour réfléchir un premier faisceau laser (54) et un premier faisceau d'émission (59), et la surface dichroïque avant (63) de ce dernier pour réfléchir un deuxième faisceau laser (55) et un deuxième faisceau d'émission (60).

9. Appareil scanner laser (1) selon l'une des revendications précédentes, **caractérisé en ce que** le sens de déplacement (75) de la tête de scanner (50) définit un axe X ou un axe de balayage et **en ce que** le porte-échantillon (2) peut être déplacé de façon linéaire dans une direction Y d'un système de coordonnées cartésien disposée à angle droit par rapport à l'axe X.

10. Appareil scanner laser (1) selon l'une des revendications précédentes, **caractérisé en ce que** le porte-échantillon (2) comprend un mécanisme de basculement (79) avec un excentrique (80) à entraînement motorisé et un axe de rotation unilatéral (81), le mécanisme de basculement (79) permettant d'aligner un porte-objets (8, 10) ou un échantillon par rapport à une ligne focale (101).

**11.** Appareil scanner laser (1) selon l'une des revendications précédentes, **caractérisé en ce qu'**il comprend un châssis (82) et une suspension (83) sur laquelle le porte-échantillons(2) peut se déplacer linéairement dans une direction Y à l'aide d'un entraînement à broche (84), la suspension (83) étant fixée au châssis (82) de façon à pouvoir pivoter et reposant sur un excentrique (80) à entraînement motorisé reposant sur le châssis (82), ce dernier permettant de régler le logement (34) du porte-échantillon et le plan d'échantillon (49) dans une direction Z essentiellement perpendiculaire.

**12.** Procédé d'utilisation d'un appareil scanner laser (1) pour représenter et/ou mesurer des échantillons fluorescents installés sur des porte-objets, traités avec deux colorants fluorescents différents, comprenant les étapes suivantes:

(a) fournir un porte-échantillon (2) pouvant être déplacé de façon motorisée avec un logement (34) pour le porte-objet (8, 10) dans un plan d'échantillon (49) ;
(b) fournir deux faisceaux laser (54, 55) de longueur d'onde différente orientés parallèlement l'un à l'autre et s'étendant parallèlement au plan (49), avec au moins un laser (51, 52) et un premier système optique (53) ;
(c) renvoyer les faisceaux laser (54, 55) vers l'échantillon avec un élément de renvoi optique (56) d'une installation de scanner (72) qui comprend une tête de scanner (50) mobile dans un mouvement de va-et-vient dans un sens de déplacement (75) parallèlement au plan (49) ;
(d) focaliser les faisceaux laser (54, 55) sur l'échantillon dans le plan (49) avec un premier objectif (57) ;
(e) transmettre aux détecteurs (61, 61') les faisceaux d'émission (59, 60) émis par les faisceaux laser (54, 55) sur l'échantillon et renvoyés par le premier objectif (57) et l'élément de renvoi (56) dans une direction essentiellement parallèle au plan (49) avec un deuxième système optique (58), et
(f) détecter les faisceaux d'émissions (59, 60) de longueurs d'onde différentes provenant des échantillons avec deux détecteurs (61, 61'),

**caractérisé en ce que** l'appareil scanner (72) comprend un entraînement (71) et un contre-oscillateur (73), la tête de scanner (50) et le contre-oscillateur (73) étant raccordés à l'entraînement (71) par le biais de bielles (70, 70') et étant fixés de façon mobile chaque à un guidage linéaire (68), **en ce que** la tête de scanner (50) est amenée avec l'entraînement (71) dans un mouvement rapide de va-et-vient dans le sens de déplacement (75), lequel définit en même temps un axe de balayage (75), le contre-oscillateur (73), lequel possède une masse qui, pour la compensation d'impulsion est au moins équivalente à la masse de la tête de scanner (50), effectuant un mouvement contraire vers la tête de scanner (50) ;
**en ce que** la tête de scanner (50) définit avec son élément de renvoi optique (56) et son sens de déplacement (75) un plan d'encliquetage (76), la déviation de la tête de scanner (50) dans l'axe X (75) étant mesurée avec une échelle (77) qui est agencée à distance d'un système de mesure linéaire (78) de l'appareil scanner laser (1) dans ce plan d'encliquetage (76),
et **en ce que** l'élément de renvoi optique (56) est réalisé sous la forme d'un miroir dichroïque (62), d'un prisme, d'un pentaprisme, d'un agencement à pentamiroir (66) ou d'une combinaison de ces derniers.

**13.** Procédé selon la revendication 12, **caractérisé en ce que** l'élément de renvoi optique (56) entraîne une séparation spatiale des deux points de focalisation obtenus (65) à une distance δ et une séparation spatiale des deux faisceaux d'émission (59, 60) renvoyés en direction des détecteurs (61, 61'), ces deux faisceaux d'émission (59, 60) n'étant pas parallèles entre eux.

**14.** Procédé selon la revendication 13, **caractérisé en ce qu'**il est utilisé un élément de renvoi optique (56) réalisé sous la forme d'un agencement à pentamiroir (66) avec un miroir dichroïque cunéiforme (62) et un miroir simple (67), cet agencement à pentamiroir (66) corrigeant les basculements de la tête de scanner (50) autour d'un axe Y s'étendant à angle droit par rapport à l'axe de balayage (75), de telle façon que les points focaux obtenus (65) ne modifient pas leur position actuelle dans le plan d'échantillon (49).

**15.** Procédé selon l'une des revendications 12 à 14, **caractérisé en ce que** la déviation de la tête de scanner (50) dans l'axe X (75) est mesurée avec une échelle (77) qui est agencée au moins à proximité du plan principal (107) du premier objectif (57).

**16.** Procédé selon l'une des revendications 12 à 15, **caractérisé en ce que** la résolution limite nominale pour la représentation et/ou la mesure d'échantillons fluorescents placés sur des porte-objets et traités avec deux colorants fluorescents différents est de 2,5 μm ou supérieure.

Fig. 1

Fig. 2

EP 2 259 125 B1

Fig. 3A

Fig. 3B

Fig. 4A

Fig. 4B

Fig. 5

24

Fig. 6

Fig. 7A

Fig. 7B

Fig. 8

Fig. 9

Fig. 10

Fig. 11

Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2184321 A
- US 5304810 A
- US 6628385 B1
- WO 02059677 A1
- DE 19707227 A1
- EP 0490510 A